(19) **Europäisches Patentamt / European Patent Office / Office européen des brevets**

(11) **EP 1 326 055 B1**

(12) **EUROPEAN PATENT SPECIFICATION**

(45) Date of publication and mention of the grant of the patent:
**24.11.2010 Bulletin 2010/47**

(51) Int Cl.:
*F24F 1/00* (2006.01)    *F24F 11/02* (2006.01)
*G09F 13/04* (2006.01)    *F24F 11/00* (2006.01)

(21) Application number: **01974674.2**

(22) Date of filing: **03.10.2001**

(86) International application number:
**PCT/JP2001/008727**

(87) International publication number:
**WO 2002/029332 (11.04.2002 Gazette 2002/15)**

(54) **AIR CONDITIONER AND TEMPERATURE DETECTOR**

KLIMAGERÄT UND TEMPERATURFÜHLER

CONDITIONNEUR D'AIR ET DETECTEUR DE TEMPERATURE

(84) Designated Contracting States:
**DE ES GB GR IT TR**

(30) Priority:
04.10.2000   JP 2000304506
04.10.2000   JP 2000304507
05.10.2000   JP 2000306524
10.10.2000   JP 2000309582
12.12.2000   JP 2000376758
02.02.2001   JP 2001026280

(43) Date of publication of application:
**09.07.2003 Bulletin 2003/28**

(73) Proprietor: **Sharp Kabushiki Kaisha**
**Osaka-shi, Osaka 545-8522 (JP)**

(72) Inventors:
• **NISHIMOTO, Masanari**
  **Hashimoto-shi, Wakayama 648-0066 (JP)**
• **ITANI, Akihiro**
  **Higashiosaka-shi, Osaka 577-0825 (JP)**
• **YAMAGUCHI, Takashi**
  **Kashihara-shi, Nara 634-0027 (JP)**
• **FUJIMOTO, Kazuhisa**
  **Osaka-shi, Osaka 545-0004 (JP)**
• **SUZUKI, Tsuneo**
  **Osaka-shi, Osaka 533-0032 (JP)**

• **FUJIMOTO, Satoru**
  **Kashihara-shi, Nara 634-0051 (JP)**
• **KONTANI, Mamoru**
  **Amagasaki-shi, Hyogo 660-0865 (JP)**
• **MORIKAWA, Mamoru**
  **Yamatokouriyama-shi, Nara 639-1024 (JP)**

(74) Representative: **Brown, Kenneth Richard**
**R.G.C. Jenkins & Co**
**26 Caxton Street**
**London SW1H 0RJ (GB)**

(56) References cited:
JP-A- 4 320 748    JP-A- 5 223 319
JP-A- 6 066 639    JP-A- 7 071 785
JP-A- 8 166 155    JP-A- 10 281 594
JP-A- 11 083 066    JP-A- 11 148 698
JP-U- 57 151 362    JP-U- 59 066 278

• PATENT ABSTRACTS OF JAPAN vol. 1999, no. 13, 30 November 1999 (1999-11-30) -& JP 11 211204 A (SANYO ELECTRIC CO LTD), 6 August 1999 (1999-08-06)
• PATENT ABSTRACTS OF JAPAN vol. 2000, no. 06, 22 September 2000 (2000-09-22) -& JP 2000 074706 A (DENSO CORP), 14 March 2000 (2000-03-14)

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention relates to an air conditioner.

**Background art**

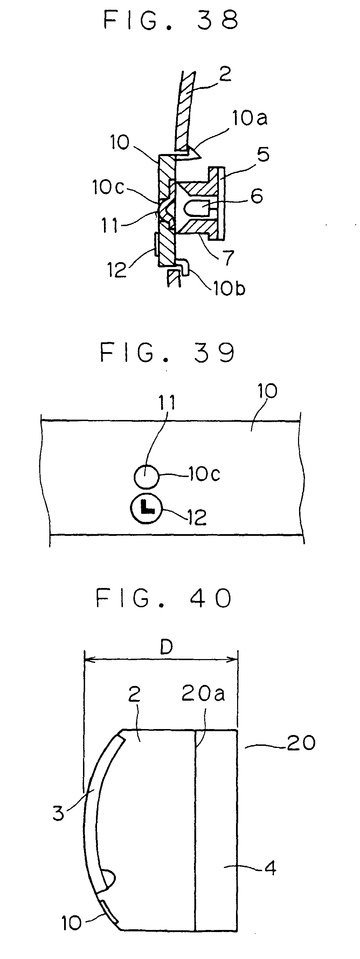

The indoor unit of an air conditioner is provided with an indicating means for indicating the operation status. Figs. 38 and 39 show a conventional indicating means, respectively showing a sectional view and a front view thereof. The front face of the indoor unit is covered with a front panel 2, and an indicator panel 10 having a pattern 12 of a character, symbol, or sign printed thereon is fitted on the front panel 2 by engaging claws 10a and 10b therewith.

In the indicator panel 10, a hole 10c is formed above the pattern 12. A diffuser 11 that diffuses light while transmitting it is firmly fitted on the indicator panel 10 so as to fill the hole 10c. Behind the diffuser 11 is arranged a light source 6, such as an LED, mounted on a circuit board 5.

The light emitted from the light source 6 is reflected by a reflector plate 7 and is thereby directed to the diffuser 11, so that uniform light emerges through the hole 10c. This causes an area above the pattern 12 to be lit, and thereby enables the user to recognize that the air conditioner is operating in the operation mode indicated by the pattern 12.

In this indicating means, however, whereas it is easy to visually recognize the lighting of the light source 6, it is difficult to read from afar the pattern 12 corresponding to the light source 6 thus lit. This requires the user to come nearer to the air conditioner to check its operation status, to the user's inconvenience.

To overcome this inconvenience, Japanese Utility Model Application Laid-Open No. S58-108333 discloses an air conditioner in which a pattern is illuminated by a light source. According to this publication, an indicator panel is provided with a transparent lettered plate having a pattern printed thereon, and a light source is placed behind the lettered plate. When the light source is lit, the light emitted therefrom is transmitted through the lettered plate and thereby makes the pattern visually recognizable. This permits the user to recognize easily the operation status of the air conditioner even from afar.

This publication discloses also an embodiment in which a diffuser is placed between the lettered plate and the light source. In this arrangement, even when the light striking the outer surface of the indicator panel is transmitted through the lettered plate, the diffuser, for example of a milky-white color, keeps the inside of the indoor unit invisible from outside and thereby keeps the appearance neat.

Fig. 40 is a side view of the body of the indoor unit of a conventional air conditioner. The body 20 is composed of a cabinet 4, which is hung on a wall, and a front panel 2 that covers the front face of the cabinet 4. Inside the cabinet 4 are arranged a fan motor, a heat exchanger, a controller, and other components. To the front face of the front panel 2, an open panel 3 having a front grille (not shown) is detachably attached.

However, in the air conditioner disclosed in Japanese Utility Model Application Laid-Open No. S58-108333 mentioned above, when the light striking the outer surface of the indicator panel is transmitted through the lettered plate, the diffuser makes the pattern, for example of a milky-white color, visually recognizable. Thus, when external light strikes the indicator panel, it is difficult to distinguish the pattern made visually recognizable by the external light from the pattern made visually recognizable by the light source lit. This hinders the user from clearly recognizing the operation status of the air conditioner.

Moreover, in a conventional air conditioner, an attempt to save energy by increasing heat exchange capacity leads to the use of a larger heat exchanger, and thus results in an increased depth $D$ (see Fig. 40) of the body 20. This causes the user to feel cramped for indoor space and uncomfortable.

Moreover, a conventional air conditioner is not so configured as to allow its operating status to be checked in a dark room, as when the user is sleeping.

To solve the problems mentioned above, the indicator panel of the indicating means sometimes has a half-mirror film formed on its surface. Even when an indicating means of this type is used, to permit the user to operate the air conditioner from a far, the air conditioner needs to be provided with a remote control signal receiver for receiving signals from a remote control unit. This requires a cover for the remote control signal receiver to be provided on the body in addition to the indicating means, and thus leads to an increase in the number of components.

The indicator panel having the half-mirror film formed thereon may be shared as the cover for the remote control signal receiver. In this case, however, there is a risk that the half-mirror film becomes electrically charged, causing a short circuit between the half-mirror film and the remote control signal receiver.

The remote control signal receiver for receiving infrared signals from the remote control unit may be placed inside the body 20, behind the indicator panel (for example, here, behind the right-hand end portion thereof). This, however, leads to another problem. Specifically, since the indicator panel has the half-mirror film formed thereon as described above, infrared signals from the remote control unit are reflected by the half-mirror film. This shortens the range over which infrared signals can be received, or even makes the reception of infrared signals completely impossible.

On the other hand, various types of air conditioner have conventionally been proposed to minimize the difference between the temperatures in the upper and lower portions of the air-conditioned room. For example, Japanese Patent Application Laid-Open No. H5-26508 discloses an air conditioner that varies the volume of air it blows out by opening and closing an air outlet according to the difference between the near-floor-surface air temperature, which is calculated from the floor-surface temperature calculated by detecting the radiation temperature from the floor surface, and the temperature at the air inlet of the air conditioner. Specifically, when there is a great difference between the temperatures of air in the upper and lower portions of the room in heating operation, and thus the user feels uncomfortable, feeling cold around the feet, the area of the opening in the air outlet is reduced so that the speed of the air blown out is increased, and simultaneously the volume of air blown out is increased.

Japanese Patent Application Laid-Open No. H10-311591 discloses an air conditioner that reduces or increases the volume of air blown out by the indoor fan according to whether the difference in temperature between the air taken in and the air blown out is small or great, respectively. Specifically, in heating operation, when the room temperature is set high and the volume of air is set small, heating is performed at high power and with a small volume of air, resulting in a great difference in temperature, and thus in density, between the air taken in and the air blown out. The resulting buoyancy makes it difficult for the heated air to reach the floor surface. The air conditioner prevents this so that the temperature near the floor surface is kept as high as possible while the speed of air is kept as low as possible.

Japanese Patent Application Laid-Open No. H9-152180 discloses an air conditioner in which, in a case as described above, the blades of an air outlet louver for controlling the direction of the air blown out in the vertical direction are directed downward.

Apart from the idea of minimizing the difference between the temperatures in the upper and lower portions of the air-conditioned room as attempted in conventional air conditioners, there are cases in which such air conditioning is sought as gives priority to the comfort around the user's "feet," called "foot-priority" operation. Specifically, heating operation is performed so as to mainly raise the "temperature around the feet" ($\approx$ the floor surface temperature), and cooling operation is performed so as not to excessively lower the "temperature around the feet."

In cooling operation performed when the user is sleeping, it is necessary only to keep moderately cool the air around the user, i.e. near the floor surface. That is, the temperature in the upper portion of the room need not be cool. This makes power-saving operation possible.

In a conventional air conditioner, the detection of the floor surface temperature is achieved by a radiation temperature detecting means, of which a typical example is a radiant heat sensor employing a thermistor. However, this method using a thermistor cannot detect the absolute temperature of the floor surface, but simply detects variation in temperature with time as variation in the resistance of the thermistor with time. Thus, this method is unsatisfactory both in the speed and accuracy with which the temperature is detected

A conventional radiant heat sensor employing a thermistor, unless it adopts a lens that shuts out interfering infrared rays and focuses the infrared rays from the floor surface on the sensor or a guide that restricts the angles of incidence of the infrared rays striking the sensor, offers too wide a temperature detection range, i.e. too wide a viewing angle. Thus, such a sensor is liable to detect the temperature of the wall nearby when only the temperature of the floor surface needs to be detected.

In an air conditioner designed for the air-conditioning of a room, a refrigerant circulates in a refrigerating cycle, and, as the refrigerant passes through a heat exchanger, it exchanges heat with the air that is blown out into the room as air-conditioned air

With this type of air conditioner, a wireless-type remote control unit (hereinafter the "remote control unit") is used not only to start/stop the operation but also to set the operation mode, such as cooling, heating, and drying operation, the specified temperature, the volume of air, and other operation parameters. The indoor unit of the air conditioner is provided with an photoreceiver portion for receiving the infrared signals transmitted from the remote control unit. When the photoreceiver portion receives a command signal transmitted from the remote control unit, a microcomputer provided within the indoor unit controls the relevant devices according to the received command signal to perform the requested air conditioning.

Some air conditioners are equipped with, as one of the operation modes in which they can operate, a demonstration mode (abbreviated to "demo mode")that permits the operation of their indoor unit alone for demonstration purposes as when they are exhibited at a distributor's shop, an exhibition, or the like.

An air conditioner equipped with such a demonstration mode is typically designed to start operating in the demonstration mode when batteries are inserted into the remote control unit with two buttons thereof held down, or when a switch provided specially for the demonstration mode is operated. This switch is useless in ordinary air-conditioning operation, and is therefore usually provided inside the indoor unit.

However, with this type of air conditioner equipped with a demonstration mode, starting the demonstration mode is troublesome, because it requires inserting batteries into the remote control unit with two buttons thereof held down or turning the specially provided switch to the "demonstration operation" position.

When air conditioners are exhibited at a distributor's shop or the like, usually a number of indoor units of different models are installed on a wall for display. Therefore, starting the demonstration mode in a number of indoor units installed in this way by operating the switch specially provided inside them or holding down two buttons of the remote control unit simultaneously requires too much trouble and time.

Moreover, in the above-described type of air conditioner equipped with a demonstration mode, the switch that is operated to start the demonstration mode is usually provided inside the indoor unit in such a way that anyone can operate it if he or she so desires. That is, there is a risk that the demonstration mode is started erroneously. Since the demonstration mode is, as described above, a mode to be used when the air conditioner is exhibited at a distributor's shop, an exhibition, or the like, if the demonstration mode is stated erroneously, it is not possible to perform ordinary air-conditioning operation.

**Disclosure of the invention**

An object of the present invention is to provide an air conditioner that permits the user to recognize its operation status clearly without sacrificing the appearance. Another object of the present invention is to provide an air conditioner in which, even when an indicator panel having a half-mirror film formed thereon is shared as a cover for a remote control signal receiver and the half-mirror film is electrically charged, there is no risk of a short circuit between the half-mirror film and the remote control signal receiver. Another object of the present invention is to provide an air conditioner that can receive signals from a remote control unit reliably without sacrificing the appearance.

According to the present invention, there is provided an air conditioner comprising a body of an indoor unit, a light source placed inside the body, and an indicator panel, fitted on a front face of the body, that, when the light source is lit, displays a pattern so that the pattern is visually recognizable, wherein the pattern is so formed as to transmit light emitted from the light source by laying, on a half-mirror film formed substantially all over a back surface of the indicator panel, an opaque film except in a portion of the half-mirror film corresponding to the pattern, the pattern being formed between the half-mirror film and the light source, wherein a remote control signal receiver for receiving a signal transmitted from a remote control unit is placed behind the indicator panel, and wherein an insulating means is provided between the remote control signal receiver and the half-mirror film.

In this arrangement, the light emitted from the light source emerges through the pattern by being transmitted therethrough, and thereby makes the pattern visually recognizable. The external light striking the front surface of the indicator panel is reflected by the surface on which the half-mirror film is formed, and thus forms a reflected image.

This makes it possible to recognize the operation status of the air conditioner clearly and thereby prevent erroneous recognition.

Also, it is possible to form a half-mirrored pattern easily on the indicator panel. Moreover, it is possible to prevent scratches on the pattern under use.

In this arrangement, there is no need to provide a cover separately for the remote control signal receiver on the body. This reduces the number of components. Moreover, there is no need to provide a plurality of covers on the surface of the body. This simplifies the structure of the body. Furthermore, sufficient insulation can be secured between the remote control signal receiver and the half-mirror film of the display panel. Thus, in addition to the advantages already mentioned, it is possible to prevent a short circuit between the remote control signal receiver and the half-mirror film even if the latter is electrically charged, and thus it is possible to place the remote control signal receiver closer to the half-mirror film and thereby widen the range of angles of incidence within which the remote control signal receiver can receive signals from the remote control unit.

In an embodiment, the surface of the indicator panel on which the half-mirror film is formed is flat. In this arrangement, the external light striking the front surface of the indicator panel is reflected by the indicator panel, and thus forms a reflected image without distortion.

Thus, with the external light forming a reflected image without distortion, it is possible to improve the appearance.

In an embodiment, the indicator panel has bracket portions, at which the indicator panel is held, formed along two opposite sides thereof. In this case, the bracket portions are made thinner than the indicator portion of the indicator panel on which the pattern is formed, and the indicator and bracket portions are separated by straight border lines.

In this arrangement, the indicator panel is held at its bracket portions, and the external light striking the external surface of the indicator panel forms an image of the border lines between the indicator and bracket portions on the half-mirror film. The image of the border lines is formed straight near opposite sides of the indicator portion.

This makes the image of the border lines parallel to the crossbars of the front grille and the longer sides of the indicator panel, and thereby improves the appearance. Moreover, by making the bracket portions thinner, it is possible to make the image of the border lines appear close to the upper and lower sides of the indicator panel. This makes the image of the border lines inconspicuous and thereby improves the appearance.

In an embodiment, the body has claws or grooves formed thereon or therein so as to engage with the bracket portions. In this arrangement, it is possible to fit the indicator panel on the body easily without forming claws on the indicator panel. Moreover, it is possible to make flat the surface on which the half-mirror film is formed.

In an embodiment, a diffuser may be provided between the indicator panel and the light source. In this arrangement, the light emitted from the light source is diffused by the diffuser before being transmitted through the pattern, and thus emerges therethrough with uniform amount of light. This enhances the viewability of the pattern.

The diffuser may be colored. In this arrangement, light of the desired color emerges through the pattern. This makes it possible to change the color of the light according to the operation status to permit clearer recognition of the operation status.

In an embodiment, the body is composed of a front portion having a front grille and a rear portion hung on a wall and smaller in width than the front portion. In this case, the front face of the front portion is so formed as to be convex frontward as seen from the side, and the interface between the front and rear portions is so formed as to be convex rearward as seen from the side. In this arrangement, at least parts of the side faces of the rear portion of the body are hidden and thus made invisible by the front portion of the body, and the front portion of the body has smaller depths at its top and bottom ends. This makes the body appear less deep than it really is, and thereby alleviates the cramped feeling, offering a comfortable indoor space.

In an embodiment, a pattern of horizontal stripes is formed on the side faces of the rear portion. This gives the user the illusion that the rear portion of the body is less deep than it really is, and thereby further alleviates the cramped feeling.

In an embodiment, the crossbars of the front grille, the stripes, and the indicator panel are arranged parallel to one another. In this arrangement, the crossbars of the front grille, the stripes, and the indicator panel are arranged parallel to one another. This improves the appearance, and makes the air conditioner an acceptable piece of furniture that contributes to a comfortable indoor space.

The insulating means may be provided on the surface of the remote control signal receiver.

In this arrangement, sufficient insulation can be secured between the remote control signal receiver and the half-mirror film of the display panel. Thus, it is possible to prevent a short circuit between the remote control signal receiver and the half-mirror film even if the latter is electrically charged, and thus it is possible to place the remote control signal receiver closer to the half-mirror film and thereby widen the range of angles of incidence within which the remote control signal receiver can receive signals from the remote control unit.

The insulating means may be an insulating sheet, or insulating paint.

The insulating means may be provided in a portion of the indicator panel facing the remote control signal receiver.

In this arrangement, sufficient insulation can be secured between the remote control signal receiver and the half-mirror film of the display panel. Thus, it is possible to prevent a short circuit between the remote control signal receiver and the half-mirror film even if the latter is electrically charged, and thus it is possible to place the remote control signal receiver closer to the half-mirror film and thereby widen the range of angles of incidence within which the remote control signal receiver can receive signals from the remote control unit.

Again, the insulating means may be an insulating sheet, or insulating paint.

A remote control signal receiver is placed behind the indicator panel for receiving a signal transmitted from a remote control unit, and the half-mirror film has a higher transmittance in a portion of the indicator panel facing the remote control signal receiver than in the remaining portion of the indicator panel.

With the transmittance of the half-mirror film made partially higher in this way, the infrared signals from the remote control unit more easily reach the remote control signal receiver, and thus can be received over a longer distance. This makes secure reception of the signals from the remote control unit possible without sacrificing the appearance.

The half-mirror film may be removed in a portion of the indicator panel facing the remote control signal receiver. With the half-mirror film partially removed in this way, the infrared signals from the remote control unit more easily reach the remote control signal receiver, and thus can be received over a longer distance. This makes secure reception of the signals from the remote control unit possible without sacrificing the appearance.

In an embodiment, etching is applied to the front surface or the back surface of the indicator panel in the portion thereof facing the remote control signal receiver. Then, the infrared signals from the remote control unit are less likely to be reflected by the front or back surface of the indicator panel; that is, they more easily reach the remote control signal receiver, and thus can be received over a longer distance.

In an embodiment, light-diffusive print is applied to the front surface or the back surface of the indicator panel in the portion thereof facing the remote control signal receiver. Then, the infrared signals from the remote control unit are less likely to be reflected by the front or back surface of the indicator panel; that is, they more easily reach the remote control signal receiver, and thus can be received over a longer distance. The light-diffusive print may be shared for the marking of a brand name or the like. This leads to a more attractive design.

In an embodiment, a diffusive sheet is affixed to the back surface of the indicator panel in the portion thereof facing the remote control signal receiver. Then, the infrared signals from the remote control unit are less likely to be reflected by the front or back surface of the indicator panel; that is, they more easily reach the remote control signal receiver, and thus can be received over a longer distance.

In an embodiment, a convex-lens-shaped portion is formed on the front surface of the indicator panel in the portion thereof facing the remote control signal receiver. Then, the infrared signals from the remote control unit are condensed, with the result that they more easily reach the remote control signal receiver, and thus can be received over a longer distance.

In an embodiment, a convex-lens-shaped portion is formed on the front surface of the indicator panel in the portion thereof facing the remote control signal receiver, with etching or light-diffusive print applied to the surface of the convex-lens-shaped portion. Then, the infrared signals from the remote control unit are less likely to be reflected by the surface of the convex-lens-shaped portion; that is, they more easily reach the remote control signal receiver, and thus can be received over a longer distance.

**Brief description of drawings**

Fig. 1 is a perspective view showing an example of the indoor unit of an air conditioner according to the present invention.

Fig. 2 is a side view of the air conditioner of Fig. 1.

Fig. 3 is a perspective view showing the front panel of the air conditioner of Fig. 1.

Fig. 4 is a sectional view of the indicating means, taken on a vertical plane cutting it from front to back.

Fig. 5 is a perspective view showing the structure of a portion of the recess of the front panel.

Fig. 6 is a perspective view showing the structure of a portion of the recess of the front panel.

Fig. 7 is a perspective view showing the entire indicator panel 1.

Fig. 8 is a sectional view showing the structure of the light source side surface of the indicator panel in more detail than in Fig. 4.

Fig. 9 is a front view showing the indicator panel of Fig. 7.

Fig. 10 is a side sectional view showing the indicator panel of the air conditioner of Fig. 4.

Fig. 11 is a side sectional view showing the remote control signal receiver of the air conditioner.

Fig. 12 is a perspective view showing an example of the indoor unit of the air conditioner.

Fig. 13A is a front view schematically showing an example of the indicator panel of the indoor unit of the air conditioner, and Figs. 13B and 13C are right side views thereof.

Fig. 14A is a front view schematically showing an example of the indicator panel of the indoor unit of the air conditioner, and Figs. 14B and 14C are right side views of the same.

Fig. 15A is a front view schematically showing an example of the indicator panel of the indoor unit of the air conditioner, and Figs. 15B and 15C are right side views of the same.

Fig. 16A is a front view schematically showing an example of the indicator panel of the indoor unit of the air conditioner, and Fig. 16B is a right side view of the same.

Fig. 17A is a front view schematically showing an example of the indicator panel of the indoor unit of the air conditioner, and Fig. 17B is a right side view of the same.

Fig. 18A is a front view schematically showing an example of the indicator panel of the indoor unit of the air conditioner, and Fig. 18B is a right side view of the same.

Fig. 19 is a sectional view of the indoor unit of the air conditioner.

Fig. 20 is a block diagram showing the configuration of the indoor unit of the air conditioner.

Fig. 21 is a diagram showing the correction values for correcting the specified room temperature.

Fig. 22 is a diagram showing the correction values for correcting the specified indoor fan rotation rate.

Fig. 23 is a flow chart illustrating the "foot-priority" operation.

Fig. 24 is a diagram showing an example of the detection range of the temperature detection device fitted to the air conditioner.

Figs. 25A, 25B, and 25C are schematic side sectional views of the temperature detection device.

Fig. 26A is a front view of an example of the heat-conductive member, Fig. 26B is a top view thereof, and Fig. 26C is a sectional view thereof along line B-B shown in Fig. 26B. Fig. 27 is a perspective view of the infrared sensor.

Fig. 28A is a top view showing an example of the temperature detection device, and Fig. 28B is a sectional view thereof along line C-C shown in Fig. 28A.

Fig. 29 is a block diagram of the control circuit of the air conditioner.

Fig. 30 is a schematic perspective view showing the external appearance of the indoor unit and the remote control unit of the air conditioner.

Fig. 31 is a diagram showing the indoor unit of Fig. 30 with the open panel thereof opened.

Fig. 32 is a diagram schematically showing the configuration of the refrigerating cycle of the air conditioner.

Fig. 33 is a sectional view schematically showing the construction of the indoor unit of Fig. 30.

Fig. 34 is a diagram schematically showing the remote control unit of Fig. 30.
Fig. 35 is a diagram schematically showing the indicator panel of Fig. 30.
Fig. 36 is a block diagram schematically showing the configuration of the electric circuit of the indoor unit of the air conditioner.
Fig. 37 is a flow chart of the procedure for setting the operation mode.
Fig. 38 is a side sectional view of and around the indicator panel of a conventional air conditioner.
Fig. 39 is a front view of the indicator panel of a conventional air conditioner.
Fig. 40 is a side view of a conventional air conditioner.

## Best mode for carrying out the invention

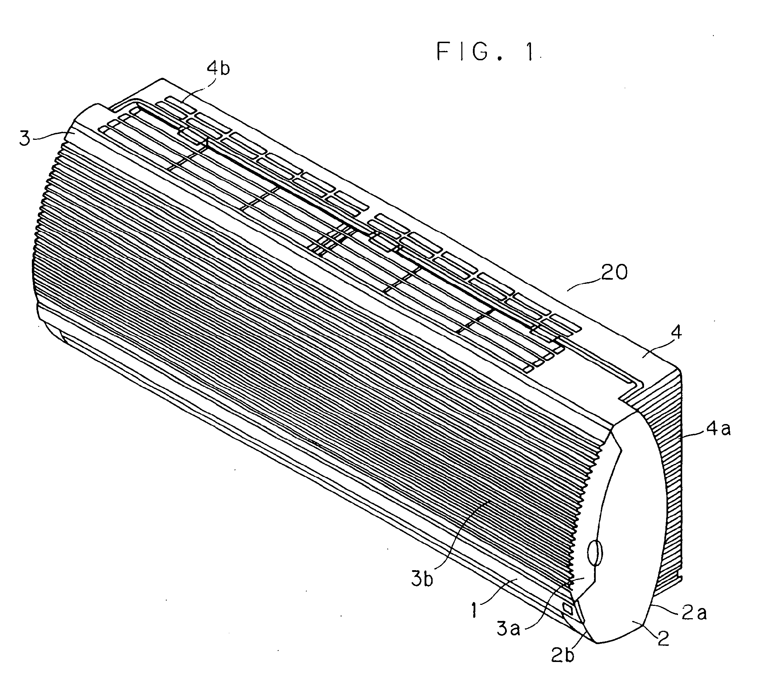

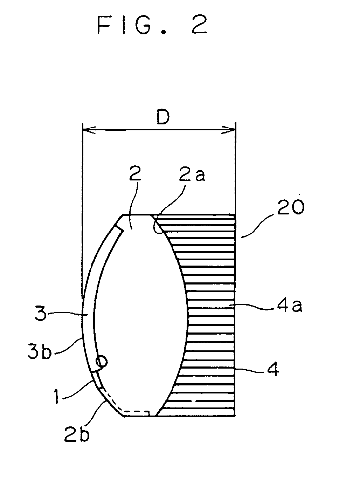

Hereinafter, embodiments of the present invention will be described with reference to the drawings. For convenience' sake, in the following descriptions, such members and elements as are found also in the conventional examples described earlier are identified with the same reference numerals. Fig. 1 is a perspective view showing an example of the indoor unit of an air conditioner according to the invention, and Fig. 2 is a side view of the air conditioner of Fig. 1.

First, the external structure of the indoor unit will be described with reference to Figs. 1 and 2. In terms of its external structure, the indoor unit has a body 20, which is composed of a cabinet 4, a front panel 2 fitted to the cabinet 4, and an open panel 3 fitted to the front panel 2.

Here, with respect to the cabinet 4, the direction in which the front panel 2 is fitted thereto is called the frontward direction (to the left in Fig. 2), and the direction opposite to this frontward direction is called the rearward direction (to the right in Fig. 2).

The cabinet 4, in its front portion, supports a heat exchanger, a fan, a controller, and other components (not shown) arranged inside the indoor unit, and is hung, at its rear face, on a wall when installed in the user's room. In one face of the cabinet 4 is formed an air inlet 4b through which to suck in, i.e. from outside the indoor unit into it, the flow of air that is produced as the fan is operated. The air inlet 4b is formed in that face of the cabinet 4 which faces the ceiling when the indoor unit is installed in the room for use (hereinafter called the "installed state"), and this face of the cabinet 4 is called its top face. The face (not shown) of the cabinet 4 that faces away from its top face is called its bottom face. With respect to this bottom face, the direction in which the top face is located is called the upward direction, and, with respect to the top face, the direction in which the bottom face is located is called the downward direction. The aforementioned heat exchanger and other components arranged inside the indoor unit are well-known components such as are generally provided in an air conditioner, and therefore their explanations will be omitted.

On the side faces of the cabinet 4, horizontally extending stripe-shaped projections 4a are formed by etching. This gives the user the illusion that the cabinet 4 is less deep than it really is, and thereby alleviates the cramped feeling. Instead of the projections 4a, a pattern of stripes may be printed on the cabinet 4, or an adhesive sheet having a pattern of stripes printed thereon may be laid on the cabinet 4.

The front panel 2 is so formed as to cover the heat exchanger, the fan, the controller, and other components arranged inside the front portion of the cabinet 4, and thus prevents the user from directly viewing the inside of the indoor unit. Moreover, in the top face of the front panel is formed an air inlet 3b through which to suck in, from outside the indoor unit into it, the air outside by exploiting the pressure difference produced as the fan is operated.

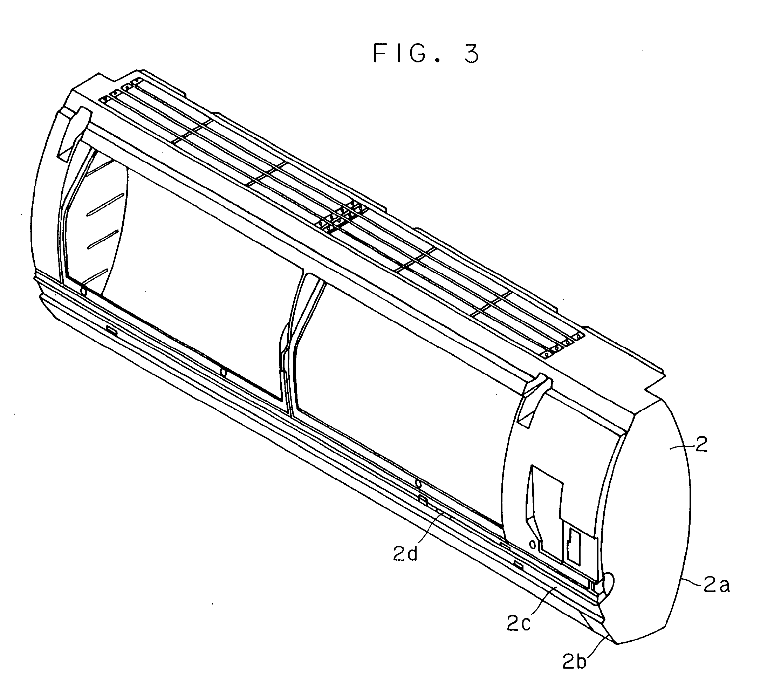

Fig. 3 shows a perspective view of the front panel 2. The front panel 2 is produced by molding a resin material by a molding means such as injection molding. When the front panel 2 is molded, a recessed portion 2c is formed therein to permit an indicator panel 1 to be fitted thereto.

Moreover, on the front face of the front panel 2, an open panel 3 is fitted so as to be freely detachable and openable. Since the open panel 3 is openable, it is easy to clean the filter (not shown) that is arranged between the open panel 3 and the front panel 2 so as to remove the dust contained in the air sucked in as the fan is operated.

The open panel 3 has a front grille 3a that has a plurality of ventilation openings extending horizontally so as to permit the outside and inside of the indoor unit to communicate with each other and that prevents the user from viewing the inside of the indoor unit.

The side faces of the front panel 2 are not flush with the side faces of the cabinet 4, but the former protrude sideward from the latter. The rear face 2a of the front panel 2 is so formed as to be convex rearward as seen from the side, and the front face 2b of the front panel 2 and the air inlet 3b of the front grille 3a are so formed as to be convex frontward as seen from the side. As a result, parts of the side faces of the cabinet 4 are hidden by the front panel 2, and the front panel 2 has smaller depths at the top and bottom ends thereof. Thus, even when heat exchange capacity is increased by the use of a larger heat exchanger to save energy, the body 20, which needs to be made larger accordingly, appears to have a smaller depth D than it really has. This alleviates the cramped feeling in the user and offers a comfortable indoor space.

As described above, here, the rear face 2a of the front panel 2 is used as the interface that divides the body 20 into a front and a rear portion so that the rear portion has a smaller width than the front portion, and the interface is

7

formed as a curved surface. Alternatively, it is also possible to use a middle portion of the cabinet 4 or a middle portion of the front panel 2 as the interface that divides the body 20 into a front and a rear portion so that the rear portion has a smaller width than the front portion, and form the interface as a curved surface.

On the front face of the front panel 2, in a lower portion thereof, a horizontally extending indicator panel 1 is fitted. The indicator panel 1 is fitted by being slid horizontally into the recessed portion 2c, and is kept in position by claw portions 2d formed in the recessed portion 2c.

Moreover, as will be described later, the indicator panel 1 is formed like a mirror. The indicator panel 1 formed as a strip-shaped mirror, the crossbars of the front grille 3a, and the projections 4a are arranged parallel to one another. The resulting uniformity in the design improves the appearance, and makes the air conditioner an acceptable piece of furniture that contributes to a comfortable indoor space.

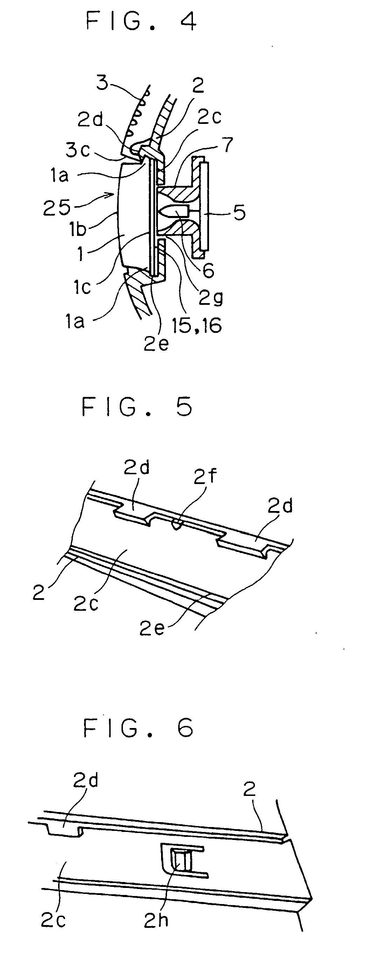

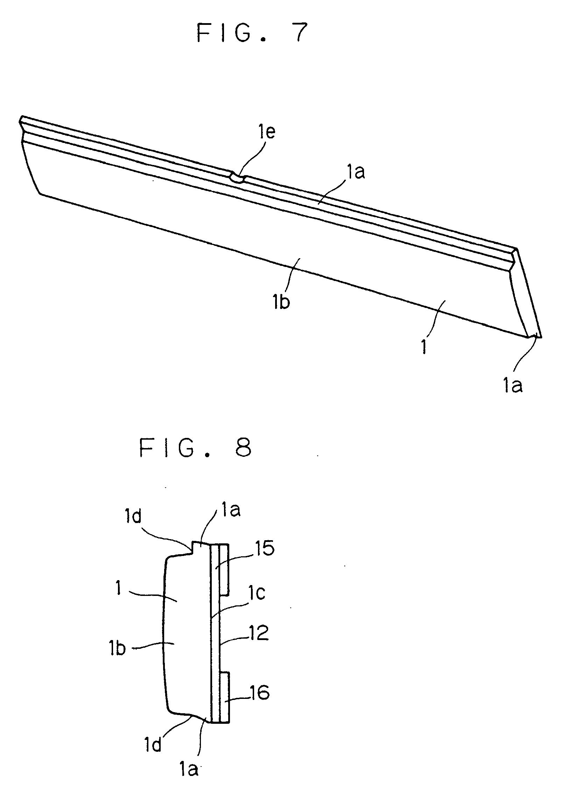

Next, the structure and arrangement of the indicating means 25 in this embodiment will be described with reference to Figs. 4 to 8. Fig. 4 is a sectional view of the indicating means 25, taken on a vertical plane cutting it from front to back. Figs. 5 and 6 are perspective views showing the structure of portions of the recessed portion of the front panel. Fig. 7 is a perspective view showing the entire indicator panel 1. Fig. 8 is a sectional view showing the structure of the light source 6 side surface of the indicator panel 1 in more detail than in Fig. 4.

The indicating means 25 is structured as follows. The indicating means 25 includes a light source 6 composed of a light-emitting element, such as an LED, that emits light produced from electric power, a circuit board 5 on which the light source 6 is mounted and that controls the electric power fed to the light source according to the operation status of the air conditioner, an indicator panel 1 arranged on the opposite side of the light source 6 to the circuit board 5 and parallel to the circuit board, an opening 2g formed through the front panel 2 in a portion thereof facing the light source 6, and a reflector plate 7 of which one end is fitted into the opening 2g and that guides the light emitted from the light source to the indicator panel.

The indicator panel 1 is made of a material having a high light transmittance, such as glass or transparent resin, and is so shaped as to have a cross section in the shape of a rectangular of which one of the longer sides is extended past the shorter sides with a predetermined thickness (these protruding portions are called the bracket portions la), with this cross sectional shape maintained over a predetermined length. As Fig. 7 shows, the bracket portions 1a have a locked portion 1e formed in a predetermined position along the length thereof.

The indicator panel 1 is so arranged that one of the longer sides of its rectangular cross section faces the light source 6 and the other faces frontward so as to be visible from the user. It is preferable that the surface of the indicator panel 1 facing the light source 6, i.e. the surface corresponding to the extended longer side (hereinafter, this surface is called the back surface 1c), be flat. The front surface of the indicator panel 1 may be made flat or given a certain curvature. In the figures, this surface is illustrated as having a predetermined curvature.

The curvature here may be made substantially equal to the curvature of the body 20 around the indicator panel 1. This makes the surfaces of the indicator panel 1 and of the body 20 look continuous, and thus improves the appearance. Moreover, giving a curvature here, as compared with a case where no such curvature is given, makes it possible to illuminate a pattern 12 in such a way that it looks larger, as will be described later. Making the pattern 12 look larger makes it easy for the user to recognize the indication.

The structure of the back surface 1c of the indicator panel 1 is shown in an enlarged view in Fig. 8. Substantially all over the back surface 1c, a thin film that reflects light, such as one made of a metal such as aluminum, is formed by a film forming means such as vapor deposition or sputtering. Here, by adjusting the film thickness and/or the material of the thin film to a predetermined value, the thin film is formed as a half-mirror film 15 having a sufficient light transmittance to transmit the light from the light source. In a case where the half-mirror film 15 is made of aluminum, which reflects light, the half-mirror film 15 has electrical conductivity.

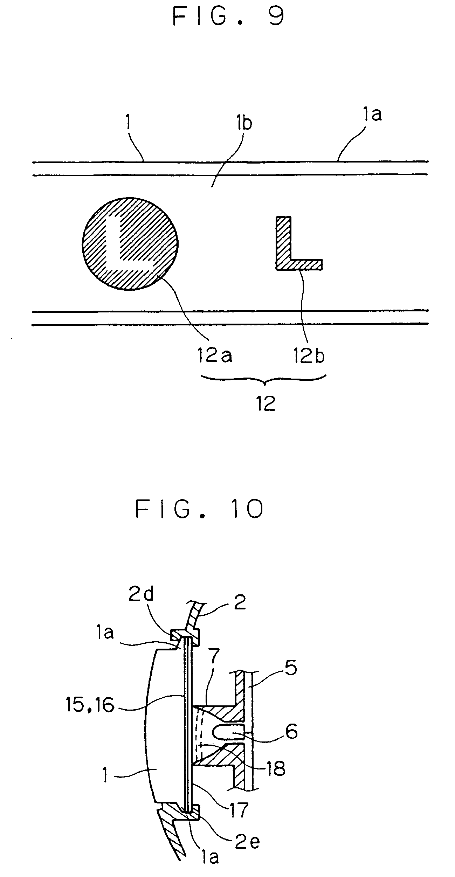

On the surface of the half-mirror film 15 facing the light source 6, a predetermined pattern 12 is formed. The pattern 12 is formed by forming a layer having a low light transmittance substantially all over the surface except for the portion corresponding to the pattern 12, for example by forming an opaque film 16 made of a material having a black or like color by vapor deposition or sputtering, or by affixing an adhesive sheet. In this way, the portion corresponding to the pattern 12 is given a higher light transmittance than the remaining portion so as to transmit more of the light emitted from the light source 6. Fig. 9 shows an example of this structure. When the letter "L" is formed as the pattern 12, it is displayed, as reference numeral 12b indicates, as an "L" in which light is transmitted inside the shape of the letter (in Fig. 9, hatching indicates portions that are illuminated brighter than the surrounding portion as a result of light being transmitted).

In the structure described above, the portion corresponding to the pattern 12 is given a higher light transmittance than the remaining portion. However, the portion corresponding to the pattern 12 may be given a lower light transmittance than the remaining portion. In that case, when the letter "L" is formed as the pattern 12, it is displayed, as reference numeral 12a indicates, as an "L" in which light is transmitted outside the shape of the letter.

In the example described above, the letter "L" is used as an example of the pattern 12. Needless to say, as the pattern 12 may be formed any character indicating the operation status, such as heating or cooling operation, any symbol such as an arrow, any pictorial mark indicating dehumidifying operation, or the like.

Next, the display operation of the indicating means 25 will be described. When the air conditioner is brought into a predetermined mode, the circuit board 5 supplies electric power to the light source 6, which thus starts emitting light. The light emitted from the light source 6 is directed toward the display panel by the reflector plate 7 with substantially no loss. When this light strikes the indicator panel 1, the part of the light incident on where the opaque film 16 is formed is absorbed or reflected by the opaque film 16, and thus is not transmitted; the part of the light incident on where the opaque film 16 is not formed is not absorbed or reflected, and thus then strikes the half-mirror film 15. Part of this light incident on the half-mirror film 15 is transmitted through the half-mirror film 15 so as to be visually recognized as lit by the user.

Next, how the indicator panel 1 is fitted will be described. The detail of the structure of a principal portion of the recessed portion 2c formed in the front panel 2 is shown in Fig. 5. In the lower wall of the recessed portion 2c, along the rear edge thereof, a horizontally extending groove portion 2e is formed. On the upper wall of the recessed portion 2c, claw portions 2d are formed in a few positions, and a locking portion 2f is formed in a predetermined position. Moreover, as Fig. 6 shows, in the rear surface of the recessed portion 2c, elastic pressing portions 2h are formed so as to protrude frontward from the rear surface. As Fig. 7 shows, along the upper and lower edges of the indicator panel 1, bracket portions 1a are formed so as to extend along its longer sides. These bracket portions 1a are made thinner than the indicator portion 1b on which the pattern is formed.

In this structure, the indicator panel 1 is slid into the recessed portion 2c horizontally from the side of the front panel 2. Then, the indicator panel 1 is pressed frontward by the pressing portions 2h, and thus the bracket portions 1a of the front panel 2 are pressed frontward and are thereby kept in contact with the claw portions 2d and the groove portion 2e.

When the indicator panel 1 is slid to a predetermined position, the locking portion 2f formed on the upper wall of the recessed portion 2c engages with the locked portion 1e formed in the upper edge of the indicator panel 1, and thereby the indicator panel 1 is kept is position. This prevents the indicator panel 1 from moving horizontally, and thus determines its position.

It is preferable to form engagement portions 3c on the lower end of the open panel 3 so that the engagement portions 3c engage with the claw portions 2d and thereby permit the open panel 3 to be locked on the front face of the front panel 2. This makes the claw portions 2d invisible from the user.

Next, a description will be given of a case where the light source 6 is not lit and external light, i.e. light coming from outside the air conditioner, is striking the indicator panel 1. When external light strikes the indicator panel 1, part of the external light is reflected by the half-mirror film 15 formed on the indicator panel 1. The light thus reflected illuminates the portions of the indicator panel 1 around the border lines 1d that divide the surfaces on which the bracket portions 1a are formed and the bracket portions 1a themselves.

As a result, an image of the bracket portions 1a and the border lines 1d is projected onto the indicator panel 1. That is, the pattern 12 is not displayed, and thus is not visually recognized by the user. Thus, there is no possibility that external light makes the pattern 12 visually recognizable, and the pattern 12 is visually recognized only when it is illuminated by the light from the light source 6. This makes it possible to recognize the operation status of the air conditioner clearly and prevent erroneous recognition thereof.

If the back surface 1c of the indicator panel 1 is formed as a curved surface or a surface having irregularities, the reflected image is distorted, which degrades the appearance. Therefore, it is preferable to make the back surface 1c flat.

Making the border lines 1d horizontally straight makes the reflected image straight and thus parallel to the crossbars of the front grille 3a (see Fig. 1), the longer sides of the indicator panel 1, and the projections 4a (see Fig. 1). The resulting uniformity in the design improves the appearance.

Making the bracket portions 1 a thinner makes the reflected image of the border lines 1 d appear closer to the upper and lower edges. This makes the reflected image inconspicuous, and thus further improves appearance.

A diffuser film 17 may be formed on the half-mirror film 15 at least in the portion thereof where the opaque film 16 is not formed. Then, the light emitted from the light source 6 is first uniformly diffused by the diffuser film 17 and then illuminates the pattern 12. Thus, uniform light emerges through the pattern 12 without forming patches of different brightness. This makes easier for the user to visually recognize the pattern.

The diffuser film 17 may be colored so that light of the desired color emerges through the pattern 12. This makes it possible to use different colors for patterns indicating different operation modes so as to permit the user to recognize the operation status more clearly.

The same effects are achieved by providing a diffuser 18 in front of the light source 6. The effects of using this diffuser 18 are achieved equally both in a case where the pattern 12 itself is illuminated and in a case where the portion surrounding the pattern 12 is illuminated so that the shadow of the pattern is displayed.

Alternatively, the same effects are achieved by forming the opaque film 16 on the front surface of the indicator panel 1 either only in the portion thereof where the pattern 12 is formed or only in the portion thereof where the pattern 12 is not formed, and then forming the half-mirror film 15 further in front. However, forming the pattern 12 on the back surface of the indicator panel 1 is preferable because doing so prevents scratches on the pattern 12.

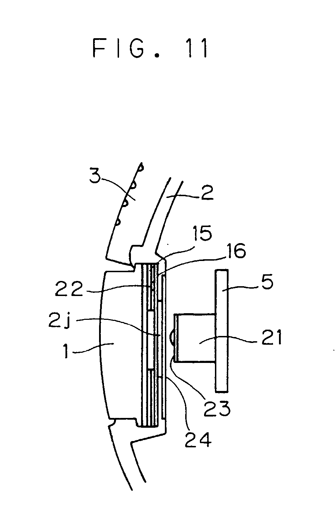

Next, with reference to Fig. 11, a description will be given of a structure where the indoor unit of an air conditioner is provided with a remote control signal receiver for receiving signals from a remote control unit from which the user controls the operation of the air conditioner and the remote control signal receiver is provided behind the indicator panel 1 described above in addition to the structure In Fig. 11, such members and elements are identified with the same reference numerals, and only the differences therefrom will be dealt with in the following description. The reason that the remote control signal receiver is provided in addition to the structure used in the embodiment described above is that doing so eliminates the need to provide a cover separately for the remote control signal receiver.

In Fig. 11, reference numeral 21 represents a remote control signal receiver, which is mounted on the circuit board 5 provided behind the indicator panel 1 so as to face it. Thus, the remote control signal receiver 21 takes the place of the light source 6 and the reflector plate 7 in the embodiment described above.

On the front surface of the remote control signal receiver 21, a first insulating means 23, such as realized with an insulating sheet, is affixed. The insulating means 23 may be realized by applying insulating paint.

In the portion of the recessed portion 2c facing the remote control signal receiver 21, an opening 2j is formed as in the embodiment described above. Here, however, a second insulating means 24, such as realized with a transparent insulating sheet, is fitted in front of and/or behind the opening 2j so as to cover it.

Moreover, in the portion of the indicator panel 1 facing the remote control signal receiver 21, insulating paint 22 (a third insulating means) is applied instead of forming the half-mirror film 15 and the opaque film 16 (the third insulating means may be applied on top of the half-mirror film 15 and the opaque film 16).

In this way, when the remote control signal receiver 21 is provided, the first, second, and third insulating means are provided to secure enhanced electrical insulation. This is because, when the half-mirror film 15 is formed on the indicator panel, the half-mirror film 15, which is made of an electrically conductive material such as aluminum, may be electrically charged under the influence of static electricity and cause a short circuit between the remote control signal receiver 21 and the half-mirror film 15.

It is preferable to place the remote control signal receiver 21, which is for receiving signals from the remote control unit, as close as possible to the opening 2j, through which the remote control signal receiver 21 receives the signals. This is because the range of incident angles within which the remote control signal receiver 21 receives signals correlates with the distance thereof from the opening 2j; specifically, the shorter the distance, the wider the range of incident angles.

However, as described above, as the remote control signal receiver 21 is placed closer to the half-mirror film 15, the insulation between them degrades. Therefore, to secure sufficient insulation, it is necessary to use an insulating means.

Thus, by applying insulating paint to each of the indicator panel, the front panel, and the remote control signal receiver, which together constitute a receiver portion, for example by affixing insulating sheets to them, enhanced electrical insulation is secured. This prevents a short circuit between the remote control signal receiver 21 and the half-mirror film 15, and thus leads to enhanced insulation performance. This ensures stable operation of the remote control signal receiver 21.

Now, an air conditioner in which reliable reception of signals from the remote control unit is achieved without degrading the appearance will be described.

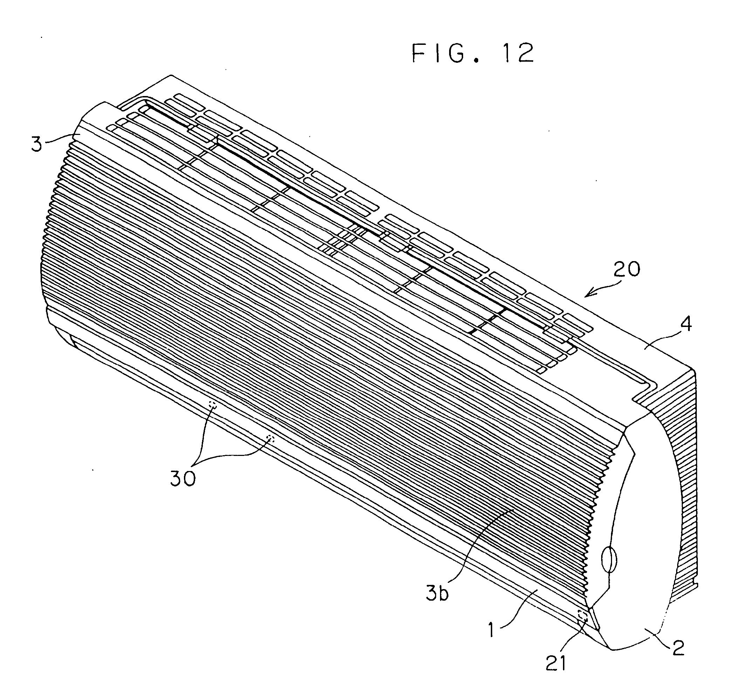

Fig. 12 is a perspective view of an example of the indoor unit of another air conditioner embodying the invention. Since Fig. 12 shows largely the same structure as Fig. 1, overlapping explanations will be omitted. On the back surface of the indicator panel 1, to the left of its center, a plurality of LED lamps 30 for indicating the operation status of the air conditioner are arranged. Moreover, on the back surface of the indicator panel 1, at its right-hand end, a remote control signal receiver 21 is arranged.

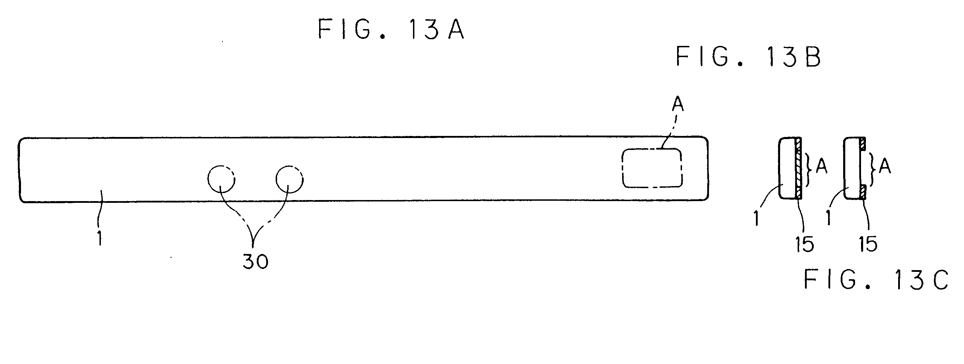

Fig. 13 is a diagram schematically showing an example of the indicator panel of the indoor unit of the air conditioner. Fig. 13A is a front view, and Figs. 13B and 13C are right side views.

On the back surface of the indicator panel 1, a half mirror film is formed. Behind an area A shown in Fig. 13, a remote control signal receiver 21 (not shown here, nor in the following embodiments) is arranged. Correspondingly, as Fig. 13B shows, in this area A facing the remote control signal receiver 21, the half-mirror film 15 is given a higher light transmittance. Alternatively, as Fig. 13C shows, in this area A, the half-mirror film 15 is removed. This makes easier for the infrared signals from the remote control unit to reach the remote control signal receiver 21, and thus makes the reception range longer. As Fig. 13A shows, on the back surface of the indicator panel 1, to the left of its center, the aforementioned LED lamps 30 are arranged. This is the same with the following embodiments.

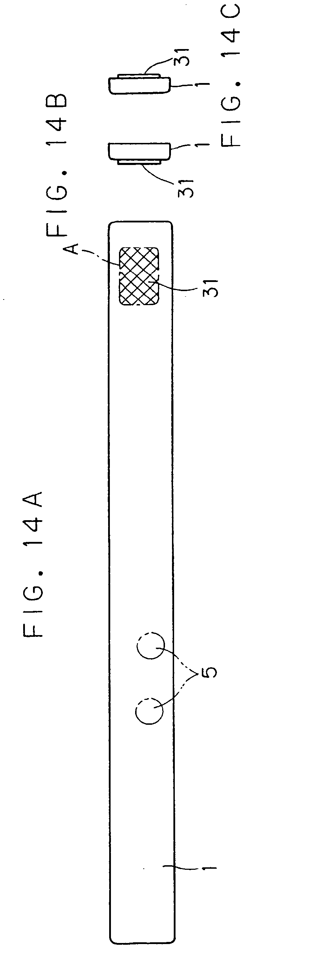

Fig. 14 is a diagram schematically showing an example of the indicator panel of the indoor unit of the air conditioner. Fig. 14A is a front view, and Figs. 14B and 14C are right side views. In the same manner as described above, on the back surface of the indicator panel 1, a half mirror film is formed (not shown here, nor in the following embodiments). On the back surface of the indicator panel 1, at the right-hand end thereof in Fig. 14A, the remote control signal receiver 21 is arranged.

Correspondingly, in addition to the structure used in the embodiment described above, in the area A facing the remote control signal receiver 21, as Fig. 14B shows, etching 31 is applied to the front surface of the indicator panel 1. Alternatively, as Fig. 14C shows, etching 31 is applied to the back surface of the indicator panel 1. This makes the infrared signals from the remote control unit less likely to be reflected by the front or back surface of the indicator panel 1, and thus makes easier for them to reach the remote control signal receiver 21, making the reception range longer.

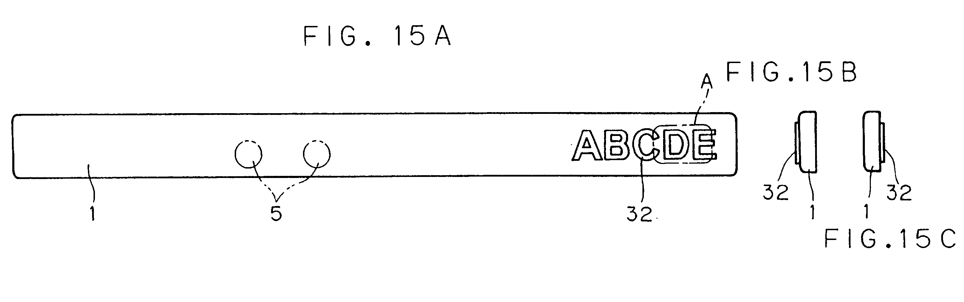

Fig. 15 is a diagram schematically showing an example of the indicator panel of the indoor unit of the air conditioner. Fig. 15A is a front view, and Figs. 15B and 15C are right side views. In the same manner as described above, on the back surface of the indicator panel 1, a half mirror film is formed. On the back surface of the indicator panel 1, at the right-hand end thereof in Fig. 15A, the remote control signal receiver 21 is arranged.

Correspondingly, in addition to the structure used in the embodiment described above, in and around the area A facing the remote control signal receiver 21, as Fig. 15B shows, light-diffusive print (medium print) 32 is applied to the front surface of the indicator panel 1. Alternatively, as Fig. 15C shows, light-diffusive print (medium print) 32 is applied to the back surface of the indicator panel 1.

This makes the infrared signals from the remote control unit less likely to be reflected by the front or back surface of the indicator panel 1, and thus makes easier for them to reach the remote control signal receiver 21, making the reception range longer. Here, as an example, a brand name "SHARP" is illustrated as marked in light-diffusive print.. In this way, by sharing light-diffusive print for the marking of a brand name or the like, it is possible to attain a more attractive design.

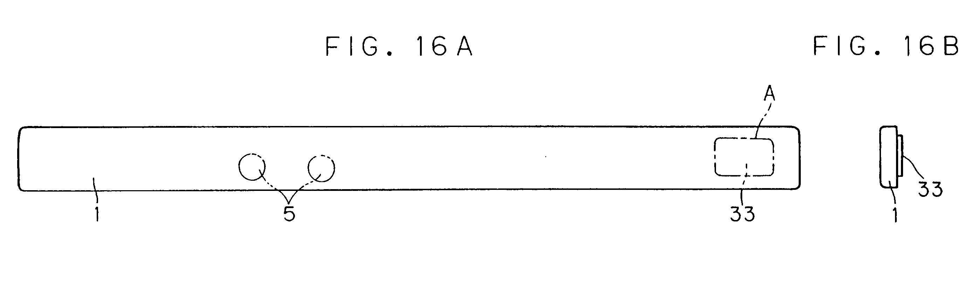

Fig. 16 is a diagram schematically showing an example of the indicator panel of the indoor unit of the air conditioner. Fig. 16A is a front view, and Fig. 16B is a right side view. In the same manner as described above, on the back surface of the indicator panel 1, a half mirror film is formed. On the back surface of the indicator panel 1, at the right-hand end thereof in Fig. 16A, the remote control signal receiver 21 is arranged.

Correspondingly, in addition to the structure used in the embodiment described above, in the area A facing the remote control signal receiver 21, as Fig. 16B shows, a diffusive sheet 33 that diffuses light is affixed to the back surface of the indicator panel 1. This makes the infrared signals from the remote control unit less likely to be reflected by the back surface of the indicator panel 1, and thus makes easier for them to reach the remote control signal receiver 21, making the reception range longer.

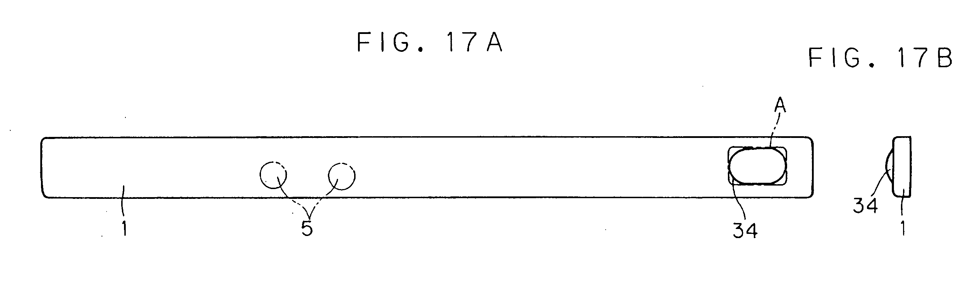

Fig. 17 is a diagram schematically showing an example of the indicator panel of the indoor unit of the air conditioner. Fig. 17A is a front view, and Fig. 17B is a right side view. In the same manner as described above, on the back surface of the indicator panel 1, a half mirror film is formed. On the back surface of the indicator panel 1, at the right-hand end thereof in Fig. 17A, the remote control signal receiver 21 is arranged.

Correspondingly, in addition to the structure used in the embodiment described above, within the area A facing the remote control signal receiver 21, a convex-lens-shaped portion 34 is formed on the front surface of the indicator panel 1. This condenses the infrared signals from the remote control unit, and thus makes easier for them to reach the remote control signal receiver 21, making the reception range longer.

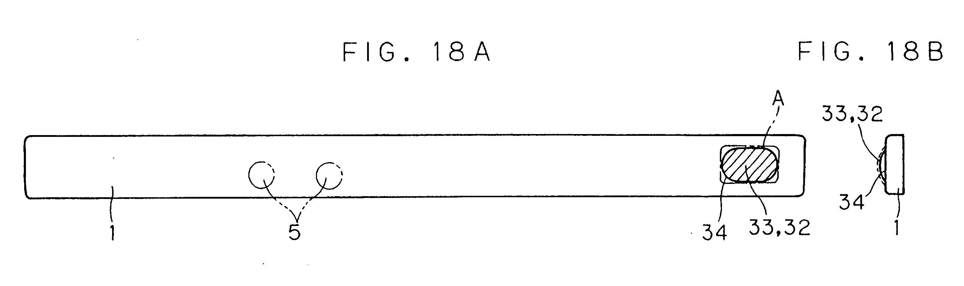

Fig. 18 is a diagram schematically showing an example of the indicator panel of the indoor unit of the air conditioner. Fig. 18A is a front view, and Fig. 18B is a right side view. In the same manner as described above, on the back surface of the indicator panel 1, a half mirror film is formed. On the back surface of the indicator panel 1, at the right-hand end thereof in Fig. 18A, the remote control signal receiver 21 is arranged.

Correspondingly, in addition to the structure used in the embodiment described above, to the surface of the convex-lens-shaped portion 34, etching 31 or light-diffusive print (medium print) 32 is applied. This makes the infrared signals from the remote control unit less likely to be reflected by the surface of the convex-lens-shaped portion 34, and thus makes easier for them to reach the remote control signal receiver 21, making the reception range longer.

As described above, according to the present invention, it is possible to realize an air conditioner that can receive signals from a remote control unit reliably without sacrificing the appearance.

Specifically, in an area on the indicator panel that faces the remote control signal receiver, the half-mirror film is either given a higher light transmittance or removed. This makes easier for the infrared signals from the remote control unit to reach the receiver, and thus makes the reception range longer.

Moreover, according to the present invention, in an area on the indicator panel that faces the remote control signal receiver, etching is applied to the front or back surface of the indicator panel. This makes the infrared signals from the remote control unit less likely to be reflected by the front or back surface of the indicator panel, and thus makes easier for them to reach the remote control signal receiver, making the reception range longer.

Moreover, according to the present invention, in an area on the indicator panel that faces the remote control signal receiver, light-diffusive print (medium print) is applied to the front or back surface of the indicator panel. This makes the infrared signals from the remote control unit less likely to be reflected by the front or back surface of the indicator panel, and thus makes easier for them to reach the remote control signal receiver, making the reception range longer. Moreover, by sharing light-diffusive print for the marking of a brand name or the like, it is possible to attain a more attractive design.

Moreover, according to the present invention, in an area on the indicator panel that faces the remote control signal receiver, a diffusive sheet that diffuse light is affixed to the back surface of the indicator panel. This makes the infrared signals from the remote control unit less likely to be reflected by the back surface of the indicator panel, and thus makes easier for them to reach the remote control signal receiver, making the reception range longer.

Moreover, according to the present invention, in an area on the indicator panel that faces the remote control signal receiver, a convex-lens-shaped portion is formed on the front surface of the indicator panel. This condenses the infrared signals from the remote control unit, and thus makes easier for them to reach the remote control signal receiver, making the reception range longer.

Moreover, according to the present invention, etching or light-diffusive print (medium print) is applied to the surface of the convex-lens-shaped portion. This makes the infrared signals from the remote control unit less likely to be reflected by the surface of the convex-lens-shaped portion 34, and thus makes easier for them to reach the remote control signal receiver 21, making the reception range longer.

Hereinafter, descriptions will be given of an air conditioner that realizes "foot-priority" operation by giving priority to the comfort around the user's feet, an air conditioner that can detect temperature within a limited detection range and can thus detect only the temperature of a particular object, and an air conditioner that detects temperature with higher speed and accuracy than ever so as to realize power saving and comfortable air conditioning.

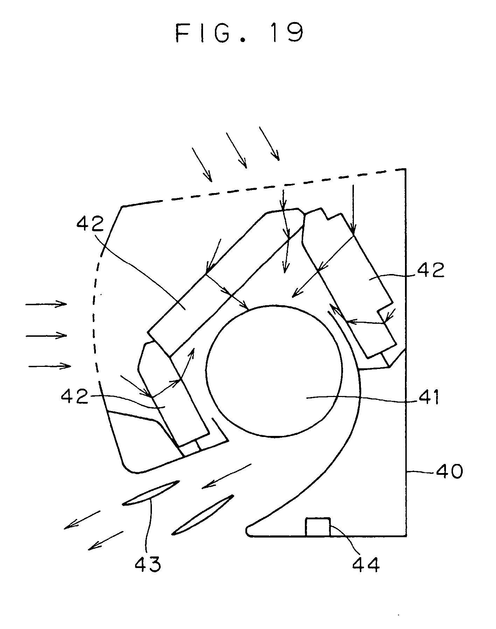

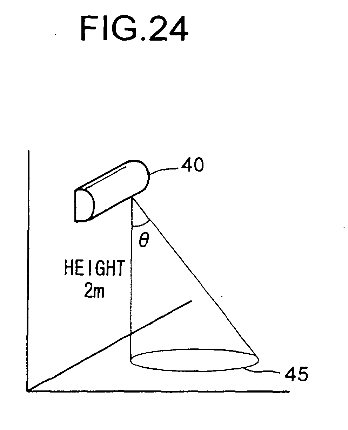

Fig. 19 is a sectional view of an example of the indoor unit of an air conditioner. In Fig. 19, reference numeral 40 represents the indoor unit of the air conditioner, reference numeral 41 represents an indoor fan, reference numeral 42 represents an indoor heat exchanger, reference numeral 43 represents a wind direction louver, and reference numeral 44 represents a radiation temperature detecting means. As arrows indicate in Fig. 19, the air in the room is sucked in by the indoor fan 41, is then subjected to heat exchange by the indoor heat exchanger 42, and is blown out in the direction controlled by the wind direction louver 43. As Fig. 24 shows, the radiation temperature detecting means 44 is provided in a right-hand portion of the bottom face of the body of the indoor unit 40 as seen from the front thereof

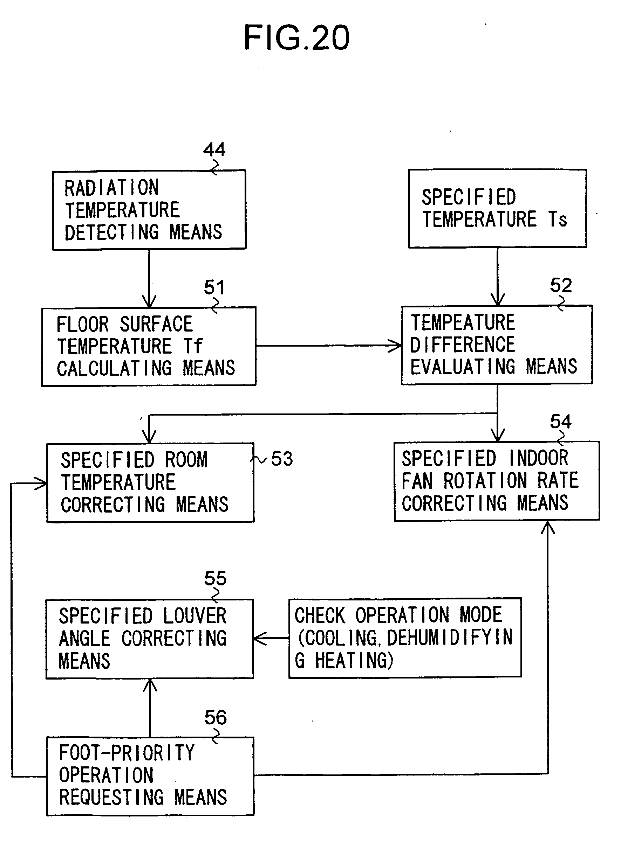

Fig. 20 is a block diagram of the configuration of the controller, employing a microcomputer, incorporated in the indoor unit 40 shown in Fig 19, and shows only those blocks that are relevant to the present invention, with those usually provided omitted. In Fig. 20, reference numeral 44 represents the radiation temperature detecting means, reference numeral 51 represents a floor surface temperature $Tf$ calculating means, reference numeral 52 represents a temperature difference evaluating means for evaluating the arithmetic relationship of the difference $Tf - Ts$ between the floor surface temperature $Tf$ and the specified room temperature Ts with a plurality of predetermined temperature differences, reference numeral 53 represents a specified room temperature correcting means, reference numeral 54 represents a specified indoor fan rotation rate correcting means, reference numeral 55 represents a specified louver angle correcting means, and reference numeral 56 represents a foot-priority operation requesting means.

Now, how this controller configured as described above operates in foot-priority operation will be described.

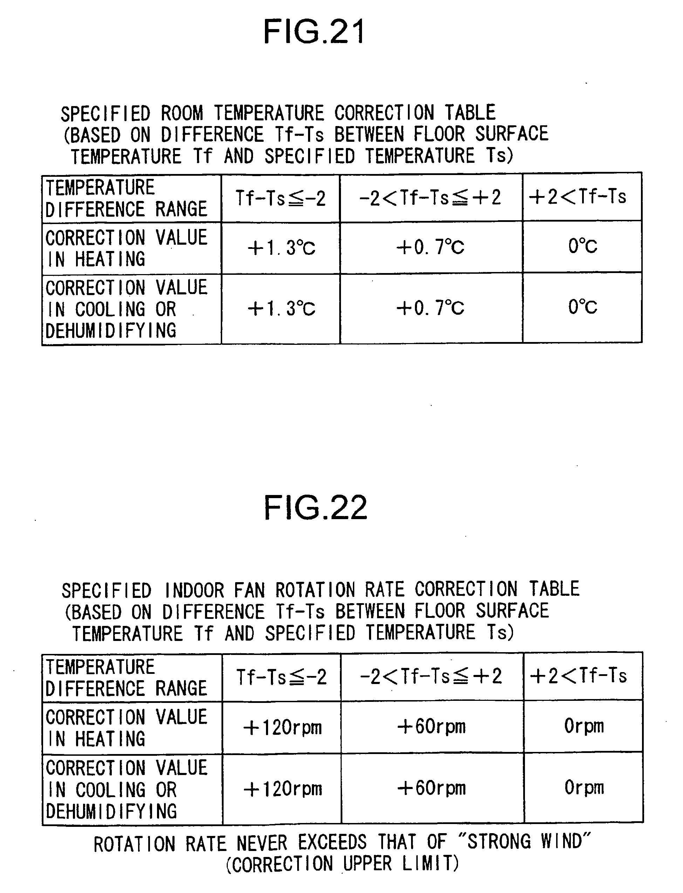

First, the specified room temperature correcting means 53 will be described. Fig. 21 shows the criteria on the basis of which the temperature difference evaluating means 52 evaluates the arithmetic relationship of the difference $Tf - Ts$ between the floor surface temperature $Tf$ and the specified room temperature $Ts$ with a plurality of predetermined temperature differences and the correction values by which the specified room temperature correcting means 53 corrects the specified room temperature as a result.

According to in which range the difference $Tf - Ts$ lies at a given time, 1.3 °C or 0.7 °C is added to the specified room temperature at that time. For example, assume that, in heating operation, the specified room temperature $Ts1$ is 20 °C and the floor surface temperature $Tf1$ is 5 °C. Then, since $Tf1 - Ts1 = -15$ °C, which, is lower than -2 °C, according to Table 1, 1.3 °C is added to the specified room temperature $Ts1$ (20 °C), and the operation of the air conditioner is controlled with the specified room temperature $Ts2$ ($Ts1 + 1.3 = 21.3$ °C).

As will be described later, the direction of the wind direction louver 43 is also corrected so that it is directed downward. Thus, as time passes in heating operation, the floor surface temperature gradually rises. When the floor surface temperature becomes a little ($\alpha$ °C) higher than $Tf2$ (19.3 °C), then ($Tf2 + \alpha$) - $Ts2$ = (19.3 + $\alpha$) - 21.3 = -2 + $\alpha$ (all values in °C), which is higher than -2 °C. Thus, according to Fig. 21, now the correction value for the specified room temperature is 0.7 °C, and therefore the operation of the air conditioner is controlled with the specified room temperature $Ts3$ ($Ts1 + 0.7 = 20.7$ °C).

As more time passes in heating operation, when the floor surface temperature becomes a little ($\alpha$ °C) higher than $Tf3$ (22.7 °C), then ($Tf3 + \alpha$) - $Ts3$ = (22.7 + $\alpha$) - 20.7 = +2 + $\alpha$ (all values in °C), which is greater than +2 °C. Thus, according to Fig. 21, now the correction value for the specified room temperature is 0 °C, and therefore the operation of the air conditioner is controlled back with the specified room temperature $Ts1$ (20 °C).

Thereafter, when the floor surface temperature falls until it becomes lower than $Tf4$ (22 °C), then $Tf4 - Ts1$ = 22 - 20 = +2 (all values in °C), which is lower than 2 °C. Thus, according to Fig. 21, the correction value 0.7 °C is added to the specified room temperature, and therefore the operation of the air conditioner is controlled with the specified room temperature $Ts3$ ($Ts1 + 0.7 = 20.7$ °C).

Thereafter, if for some reason the floor surface temperature falls further until it becomes lower than $Tf5$ (18.7 °C), then $Tf5 - Ts3$ = 18.7 - 20.7 = -2 (all values in °C), which is lower than -2 °C. Thus, according to Fig. 21, the correction value 1.3 °C is added to the specified room temperature, and therefore the operation of the air conditioner is controlled with the specified room temperature $Ts2$ ($Ts1$ + 1.3 = 21.3 °C).

In the air conditioner, the specified room temperature as desired by the user is transmitted as a command from the remote control unit or the like (not shown) to the controller provided inside the main body of the air conditioner. Apart from such manual commanding, the air conditioner can operate in an automatic or spontaneous operation mode or the like in which it determines its own settings automatically by reading ambient conditions, such as the indoor and outdoor temperatures. The air conditioner (machine) can control itself automatically also for safety or other reasons. The air conditioner compares the specified temperature and the room temperature, and controls the performance of the compressor and the like to make the room temperature equal to the specified temperature.

The specified room temperature correcting means 53 described above exercises the control described above on the basis of the specified room temperature $Ts1$ set initially. However, when the specified room temperature is changed to $Tsn$, it calculates $Tf - Tsn$ anew and controls the correction according to Fig. 21.

Next, how the specified indoor fan rotation rate correcting means 54 operates in foot-priority operation will be described. Fig. 22 shows the criteria on the basis of which the temperature difference evaluating means 52 evaluates the arithmetic relationship of the difference $Tf - Ts$ between the floor surface temperature $Tf$ and the specified room temperature $Ts$ with a plurality of predetermined temperature differences and the correction values by which the specified indoor fan rotation rate correcting means 54 corrects the rotation rate as a result.

According to in which range the difference $Tf - Ts$ lies at a given time, 120 rpm or 60 rpm is added to the specified rotation rate at that time. For example, assume that, just as in the case described above, in heating operation, the specified room temperature $Ts1$ is 20 °C and the floor surface temperature $Tf1$ is 5 °C. Then, since $Tf1 - Ts1$ = 15 °C, which is lower than -2 °C, according to Fig. 22, 120 rpm is added to the specified rotation rate $F1$ rpm of the indoor fan 41, and the indoor fan is operated at (F1 + 120) rpm. As described above, in addition, the specified room temperature correcting means 53 increases the specified room temperature by 1.3 °C, and the angle of the louver 5 is corrected so that it is directed downward. Thus, the floor surface temperature starts rising gradually.

As in the case described above, when the floor surface temperature becomes a little ($\alpha$ °C) higher than $Tf2$ (19.3 °C), then ($Tf2 + \alpha$) - $Ts2$ = (19.3 + $\alpha$) - 21.3 = -2 + $\alpha$ (all values in °C), which is higher than -2 °C. Thus, the specified room temperature correcting means 53 (Fig. 21) sets the correction value for the specified room temperature at 0.7 °C, and therefore the specified room temperature is now $Ts3$ ($Ts1$ + 0.7 = 20.7 °C). In addition, the specified indoor fan rotation rate correcting means 54 (Fig. 22) adds 60 rpm to the specified rotation rate of the indoor fan 41, and therefore the indoor fan is operated at (F1 + 60) rpm.

As more time passes in heating operation, when the floor surface temperature becomes a little ($\alpha$ °C) higher than $Tf3$ (22.7 °C), then ($Tf3 + \alpha$) - $Ts3$ = (22.7 + $\alpha$) - 20.7 = +2 + $\alpha$ (all values in °C), which is greater than +2 °C. Thus, the specified room temperature correcting means 53 (Fig. 21) sets the correction value for the specified room temperature at 0 °C, and therefore the specified room temperature turns back to $Ts1$ (20 °C). In addition, the specified indoor fan rotation rate correcting means 54 (Fig. 22) sets the specified rotation rate of the indoor fan 41 at 0 rpm, and therefore the indoor fan is operated back with the specified indoor fan rotation rate F1 rpm.

Thereafter, when the floor surface temperature falls until it becomes lower than $Tf4$ (22 °C), then $Tf4 - Ts1$ = 22 - 20 = +2 (all values in °C), which is lower than 2 °C. Thus, the specified room temperature correcting means 53 (Fig. 21) adds the correction value 0.7 to the specified room temperature and makes it equal to $Ts3$ ($Ts1$ + 0.7 = 20.7 °C). In addition, the specified indoor fan rotation rate correcting means 54 (Fig. 22) adds 60 rpm to the specified rotation rate $F1$ of the indoor fan 41, and therefore the indoor fan is operated at (F1 + 60) rpm.

Thereafter, if for some reason the floor surface temperature falls further until it becomes lower than $Tf5$ (18.7 °C), then $TJ5 - Ts3$ = 18.7 - 20.7 = -2 (all values in °C), which is lower than -2 °C. Thus, the floor surface temperature Tf calculating means 51 (Fig. 21) adds the correction value 1.3 °C to the specified room temperature and makes it equal to $Ts2$ ($Ts1$ + 1.3 = 21.3 °C). In addition, the specified indoor fan rotation rate correcting means 54 (Fig. 22) adds 120 rpm to the specified rotation rate $F1$ of the indoor fan 41, and therefore the indoor fan is operated at (F1 + 120) rpm. Here, the rotation rate is never so corrected as to exceed the rotation rate corresponding to "strong wind," which thus serves as the upper limit of the rotation rate.

In the description above, the control described above is exercised on the basis of the specified room temperature $Ts1$ set initially. However, when the specified room temperature is changed to $Tsn$, the value of $Tf - Tsn$ is calculated anew so that, on the basis of this new value, the correction by the specified room temperature correcting means 53 (Fig. 21) and the specified indoor fan rotation rate correcting means 54 (Fig. 22) is controlled.

Next, how the specified louver angle correcting means 55 operates in foot-priority operation will be described.

Assume that the angle of the louver when it is directed vertically (downward) with respect to the indoor unit is 0°, and that its angle when it is directed horizontally (frontward) is 90°. At the start of "foot-priority" operation, the louver angle is changed to about 22° (depicted as directed downward in the following description) in heating operation, and to about 90° (depicted as directed horizontally in the following description) in cooling or dehumidifying operation. The indication of the wind direction on the remote control unit is changed to "automatic." When the user operates a "wind direction" key to change the settings during "foot-priority" operation, the direction of the wind direction louver 43 is changed to the newly set direction. Even when "foot-priority" operation is cancelled (i.e. switched to another mode of operation, such as ordinary operation), the wind direction set during "foot-priority" operation is maintained. In the air conditioner, at the right-hand end of the wind direction louver, as seen from the front thereof, is provided a stepping motor that drives the wind direction louver and controls its angle.

The foot-priority operation requesting means 56 involves pressing the "foot-priority" operation key provided on the remote control unit and thereby transmitting a signal to the main body of the air conditioner so that the signal is recognized by the controller provided in the main unit. When the "foot-priority" operation key is pressed during foot-priority operation, foot-priority operation is canceled.

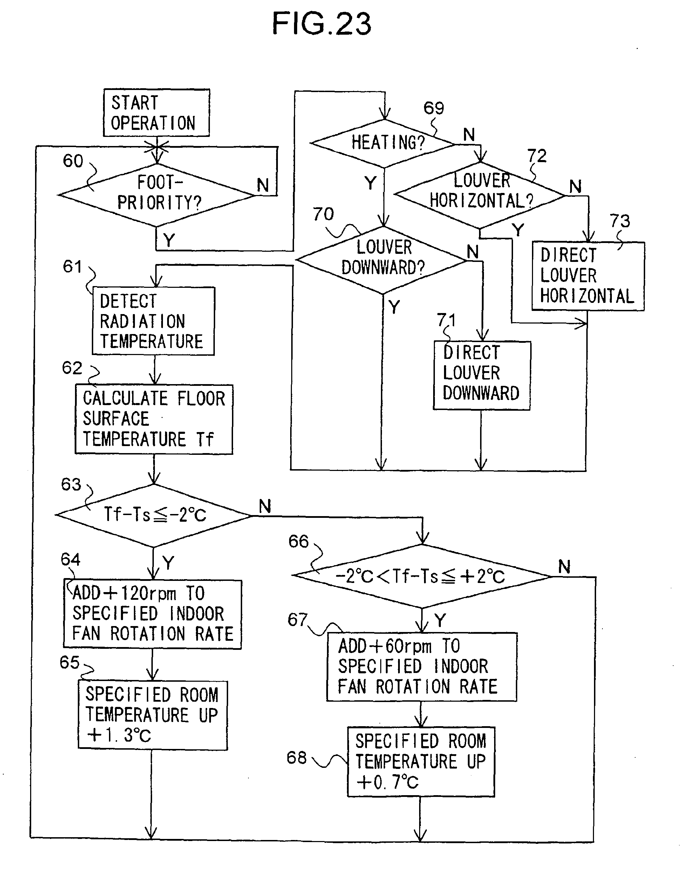

Next, foot-priority operation will be described with reference to a flow chart in Fig. 23, When the air conditioner starts being operated, first, in step 60, whether foot-priority operation is being performed or not is checked. If foot-priority operation is being performed, then, in step 69, whether heating operation is being performed or not is checked and, if so, then, in step 70, whether the wind direction louver 43 is directed downward or not is checked. If not, then, in step 43; the wind direction louver 43 is directed downward.

If, in step 69, it is found that not heating operation but cooling or dehumidifying operation is being performed, then, in step 72, whether the wind direction louver 43 is directed horizontally or not is checked. If not, then, in step 73, the wind direction louver 43 is directed horizontally. If, in step 60, it is found that foot-priority operation is not being performed, then the flow returns to before step 60.

Next, in step 61, the radiation temperature is detected, then, in step 62, the floor surface temperature $Tf$ is calculated, and then, in step 63, whether the floor surface temperature $Tf$ - specified room temperature $Ts$ is lower than -2 °C or not is checked. If this difference is lower than -2 °C, then, in step 64, operation is continued with +120 rpm added to the specified rotation rate $F$ of the indoor fan, and in addition, in step 65, control is exercised with 1.3 °C added to the specified room temperature $Ts$. If, in step 63, the floor surface temperature $Tf$ - the specified room temperature $Ts$ is higher than -2 °C, then, in step 66, whether or not the temperature difference $Tf$ - $Ts$ is higher than -2 °C and lower than 2 °C is checked, and, if so, then, in step 67, operation is continued with +60 rpm added to the specified rotation rate $F$ of the indoor fan, and in addition, in step 68, control is exercised with 0.7 °C added to the specified room temperature $Ts$. If, in step 66, the temperature difference $Tf$ - $Ts$ is higher than 2 °C, no correction is made at all. Then, the sequence of steps described above is repeated.

As described above, in foot-priority operation, when the floor surface temperature $Tf$ is low, the specified room temperature $Ts$ and the specified rotation rate of the indoor fan are increased by predetermined values, and the wind direction louver 43 is directed downward in heating operation and horizontally in cooling or dehumidifying operation. In this way, it is possible to make the floor surface temperature higher so as to enhance warmness in heating operation and prevent overcooling in cooling operation, and thereby give priority to the comfort around the user's feet.

The air conditioner may be provided with a sleep-time operation requesting means; that is, it may be so configured as to start "sleep-time operation" when a command requesting "sleep-time operation" is transmitted from the remote control unit or the like to the controller in the main body of the air conditioner, or when the time has come at which it is set to stop operation by the timer, or when it detects that the brightness in the room demands "sleep-time operation." In these cases, when cooling operation is performed as sleep-time operation, by setting the specified floor surface temperature to be higher than the specified room temperature $Ts$ by an adequate value and setting the rotation rate of the indoor fan and the direction of the wind direction louver 43 appropriately, it is possible to perform "foot-priority" operation, in which the floor surface temperature is made moderately low with little regard to the rise in the temperature in the upper portion of the room, and thereby achieve power-saving cooling operation.

Next, descriptions will be given of the radiation temperature detecting means 44 (hereinafter referred to also as the temperature detection device) and the floor surface temperature $Tf$ calculating means 51. Here, the radiation temperature detecting means 44 adopts an infrared sensor 80 employing a thermopile as used in a radiation thermometer, and thus can detect the temperature of a remote object with high accuracy.

In general, radiation thermometers have extremely limited viewing angles. When a radiation thermometer is applied to an air conditioner, where it is necessary to detect temperature over a relatively large floor area, the radiation thermometer needs to be given a special optical design that suits such application. Moreover, the radiation thermometer needs to be given a neat appearance as the radiation temperature detecting means 44 incorporated in the air conditioner (the indoor unit 40).

Fig. 24 shows an example of the detection range covered by the temperature detection device of the present invention incorporated in the air conditioner (the indoor unit 40). The indoor unit 40 is placed at a height of about 2 m from the floor surface, and, in a case where it is necessary to detect the average surface temperature over a floor surface area corresponding to two tatami mats, the viewing angle θ of the temperature detection device (not shown) is about 40°.

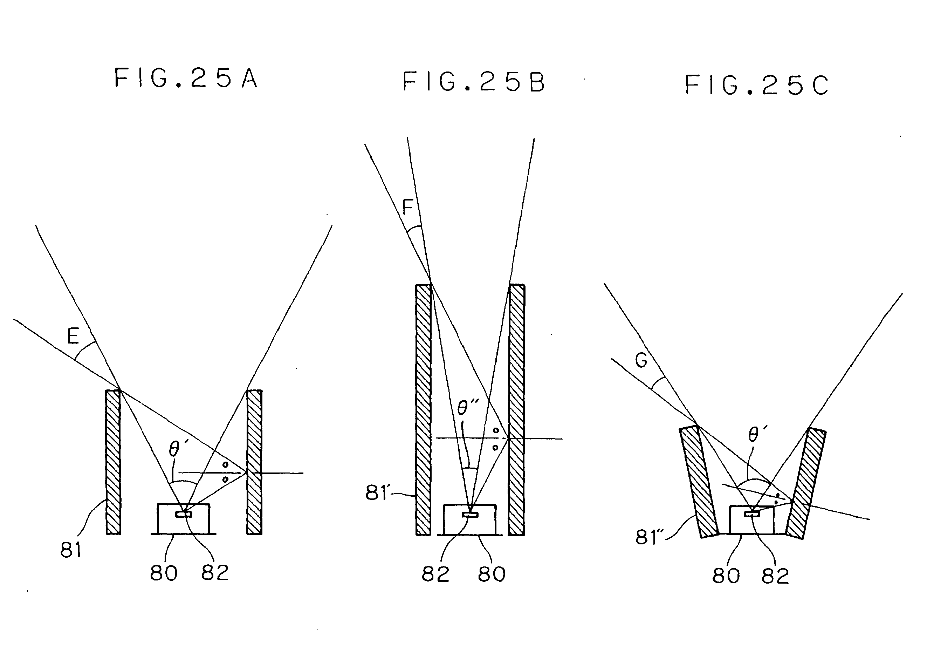

Here, a typical thermopile-type infrared sensor used in the temperature detection device of the present invention has a viewing angle of 100° or more, and therefore its viewing angle needs to be limited by providing a light guide cylinder or the like around the infrared sensor. Fig. 25 is a diagram schematically showing side sectional views of the temperature detection device 44 of the present invention. Around a thermopile-type infrared sensor 80, a light guide cylinder 81, 81', or 81" is provided, and the viewing angle θ' is larger than the viewing angle θ". Normally, not only the infrared rays radiating from the target surface within the viewing angle θ' or θ" are detected by a photoreceiver portion 82, but also interfering infrared rays from outside the viewing angle θ' or θ" are reflected by the inner surface of the light guide cylinder 81, 81', or 81" and are detected by the photoreceiver portion 82. Here, the larger the viewing angle, the larger the range E or F of angles for interfering infrared rays, and thus the greater the error in the detected temperature. On the other hand, in Fig. 25C, although the viewing angle is the same as in Fig. 25A, the cylinder 81" has narrower diameters toward its bottom, and this makes the range G of angles for interfering infrared rays smaller than E.

In this figure, for simplicity's sake, only the interfering infrared rays that are reflected only once by the inner surface of the cylinder are shown. This figure shows that, the larger the viewing angle, the larger the range of angles for interfering infrared rays, and thus the greater the error in the detected temperature.

The error in the detected temperature can be reduced by preventing entrance of interfering infrared rays, and this is achieved by providing an infrared-transparent lens (not shown) at the top of the cylinder 81, 81', or 81'.

As described above, in the temperature detection device 44 employing a thermopile-type infrared sensor, to measure the temperature of the target surface with high accuracy, it is essential to detect only the infrared rays incident within the viewing angle of the temperature detection device 44. In this case, the infrared rays radiating from the light-guide cylinder and the lens also contribute to the error in the detected temperature, and therefore it is preferable that the cylinder and the lens be always kept at the same temperature as the infrared sensor.

Accordingly, in the embodiments of the present invention described below, as an example of the light guide cylinder, a heat-conductive member having a light-guide recess formed therein in the shape of an inverted truncated cone is used, and the lens is fitted into the heat-conductive member to minimize the difference between its temperature and that of the infrared sensor.

Hereinafter, embodiments of the temperature detection device 44 of the present invention for use in air conditioners will be described with reference to the relevant drawings.

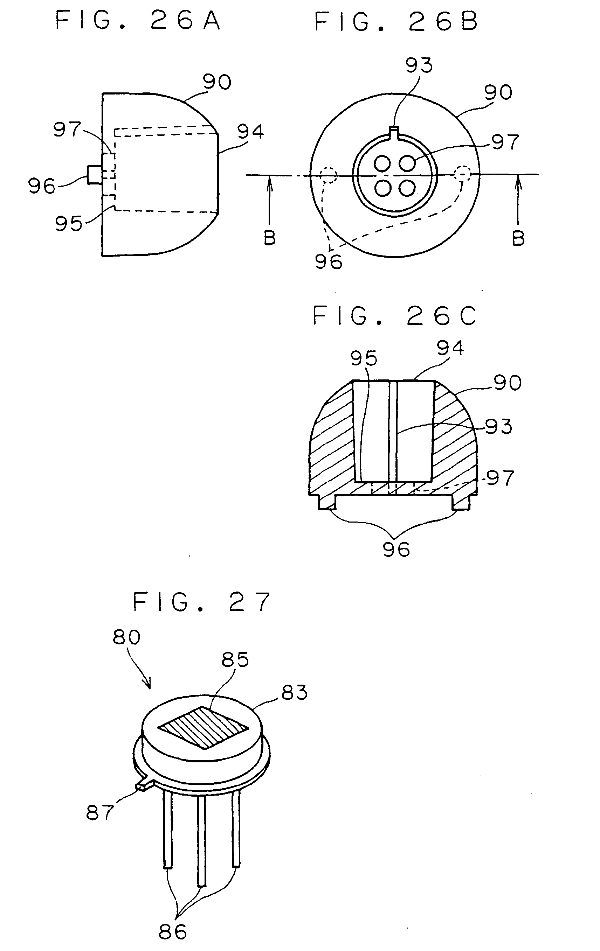

Fig. 26A is a front view of an example of the heat-conductive member of the present invention, Fig. 26B is a top view thereof, and Fig. 26C is a sectional view thereof along line B-B. The heat-conductive member (also called the aluminum guide) 90 has a light guide recess formed therein in the shape of an inverted truncated cone so that the area of the opening 94 of the recess is larger than the area of the inner bottom surface 95 thereof. On the outer bottom surface of the heat-conductive member 90, a projection 96 that fits directly into a printed circuit board is formed. In the inner bottom surface 95, holes 97 through which to lay the electrode leads of the infrared sensor are formed. Inside the recess of the heat-conductive member 90, a groove 93 along which the projection on the thermopile-type infrared sensor is guided and that thus serves as a part of a positioning means is formed.

Here, by forming the recess of the heat-conductive member 90 in the shape of an inverted truncated cone as shown in Fig. 25C, it is possible to reduce the range of angles for interfering infrared rays relative to a given viewing angle.

The heat-conductive member 90 may be made of any material that has high heat conductivity and high heat capacity and that is easy to shape, preferably a metal and further preferably aluminum. High heat conductivity makes it possible to keep the temperature of the infrared sensor equal to the ambient temperature, and high heat capacity alleviates the effect of a sudden change in the ambient temperature. Thus, it is possible to detect temperature stably.

Fig. 27 is a perspective view of the thermopile-type infrared sensor of the present invention. A thermopile is housed inside a metal case 83 and an infrared-transparent filter 85 provided in the top face of the metal case 83. The thermopile is composed of a plurality of serially connected thermocouples formed on a silicon substrate, with the hot junction at one end serving as the photoreceiver portion and the cold junction at the other end connected to metal case 83. Structured in this way, the thermopile offers higher detection speed than a thermistor, which is a temperature-sensitive resistor.

Every object radiates infrared rays of which the energy is proportional to the fourth power of the absolute temperature of the object. Therefore, the floor surface of the room also radiates infrared rays, which enter the infrared sensor 80 of the air conditioner about 2 m away. Thus, between both ends of the aforementioned thermocouples appears a voltage that is substantially proportional to the energy of the incident infrared rays.

Moreover, electrode leads 86 are provided, and, on the side surface of the metal case 83, a projection 87 is formed that is guided along the groove 93 shown in Fig. 26 so as to serve as the other part of the positioning means.

As the positioning means for positioning the heat-conductive member 90 shown in Fig. 26 and the thermopile-type infrared sensor 80 shown in Fig. 27 with respect to each other, it is also possible to form a vertically extending projection instead of the groove 93 shown in Fig. 26B, and form a groove instead of the projection 87 shown in Fig. 27.

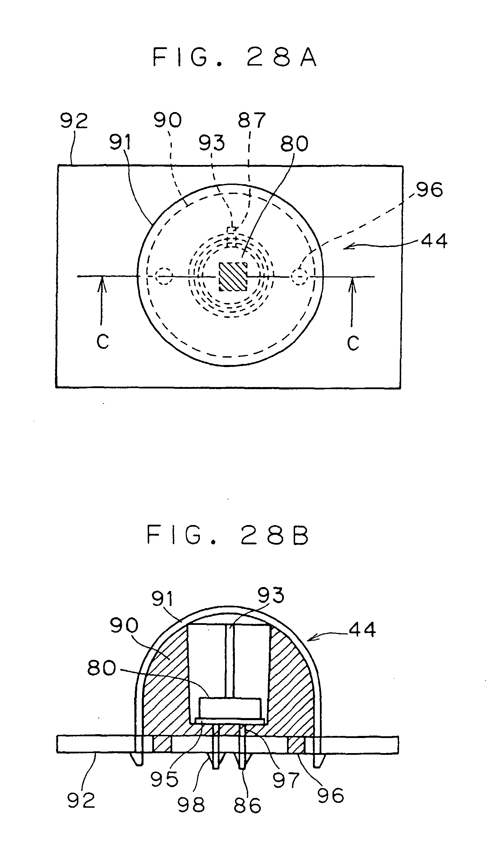

Fig. 28A is a top view of an example of the temperature detection device 44 of the present invention, and Fig. 28 is a sectional view thereof along line C-C shown in Fig. 28A. Here, the heat-conductive member 90 is the same as that shown in Fig. 26, and the thermopile-type infrared sensor 80 is the same as that shown in Fig. 27. The thermopile-type infrared sensor 80 is positioned on the inner bottom surface 95 as a result of the projection 87 being guided along the groove 93, and the electrode leads 86 are laid through the holes 97. Then, a lens 91 of which the internal shape is identical with the external shape of the heat-conductive member 90 is fitted around the heat-conductive member 90. The temperature detection device 44 is structured in this way.

In the temperature detection device 44, for example, when the temperature of the heat-conductive member 90 is 0.5 °C higher than the temperature of the infrared sensor 80, the temperature of the target object is detected with an error that makes the detected temperature about 5 °C higher than it really is. The accuracy with which temperature is detected can be increased by minimizing the temperature differences among the thermopile-type infrared sensor 80, the heat-conductive member 90, and the lens 91. That is, by maximizing the area of contact between the thermopile-type infrared sensor 80 and the heat-conductive member 90 and eliminating the gap between the lens 91 and the heat-conductive member 90, it is possible to detect temperature with high accuracy. Higher accuracy can be achieved by minimizing the reflection of infrared rays on the inner surface of the recess of the heat-conductive member 90, and thus it is preferable that the inner surface of the recess of the heat-conductive member 90 be given a matte black finish.

It is preferable that the lens 91 be a multiple-element Fresnel lens. This makes it possible to detect infrared rays at as many points on the target surface as the multiple elements and measure the temperature as the average value calculated from the results thus obtained. Here, an eleven-element lens is used. The reason that a multiple-element lens is used here is that its use makes it possible to measure the temperature of a relatively large target floor surface as the average of the temperatures detected at eleven points in that area. A single-element lens would measure only the temperature in a central portion of the floor surface.

The lens 91 needs to be focused precisely on the photoreceiver portion of the thermopile-type infrared sensor 80. The lens 91 is made of a material that exhibits a high transmittance to infrared rays and that is inexpensive, preferably silicon and further preferably polyethylene.

The temperature detection device of the present invention does not require such high accuracy as is required by commercially available radiation thermometers. Therefore, by using inexpensive polyethylene instead of expensive silicon, it is possible to make the temperature detection device inexpensive.

The heat-conductive member 90 and the lens 91 may be given any external shapes as long as they do not spoil the appearance of the air conditioner when it is installed.

As a means for mounting the temperature detection device 44 on a printed circuit board, the bottom surface of the heat-conductive member 90 makes contact with the printed circuit board 92, and the projection 96 fits directly into a hole formed in the printed circuit board 92. Moreover, the electrode leads 86 are laid through the printed circuit board 92, and are firmly fixed to the printed circuit board 92 with solder 98. Moreover, the lens 91 meshes with the printed circuit board 92.

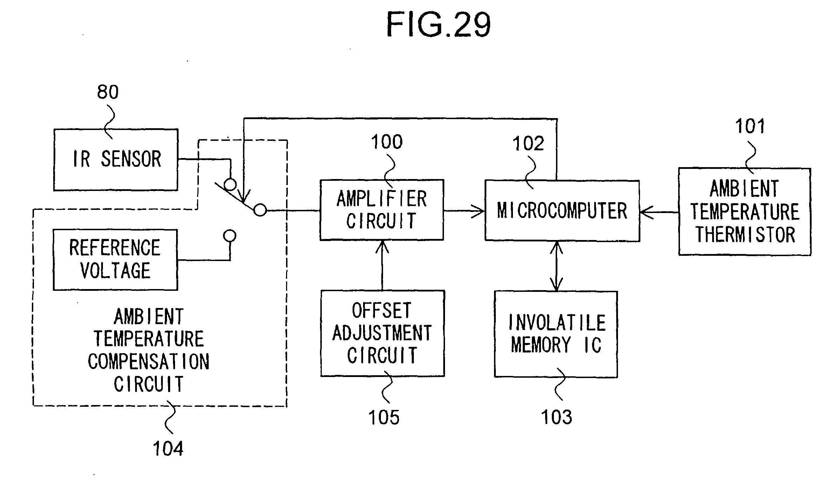

Next, how the floor surface temperature is measured in the air conditioner incorporating the temperature detection device 44 of the present invention will be described. Fig. 29 is a block diagram of an example of the control circuit of the air conditioner incorporating the temperature detection device 44 of the present invention. An offset voltage for an amplifier circuit 100 composed of an operational amplifier circuit (not shown) is adjusted by an offset adjustment circuit 105 beforehand in the manufacturing process of the air conditioner. Moreover, the output characteristic of the amplifier circuit 100 varies according to the ambient temperature, and therefore an ambient temperature compensation circuit 104 is provided. When infrared rays are received from the floor surface, a voltage appears between both ends of the thermocouples of the infrared sensor 80. This voltage is amplified by a factor of about 5,000 by the amplifier circuit 100, and is then fed to an A/D port (not shown) of a microcomputer 102. The microcomputer 102 measures the ambient temperature as the temperature of the infrared sensor 80 itself by means of an ambient temperature measurement thermistor 101, and then, on the basis of the thus measured temperature and the value output from the 100, calculates the floor surface temperature.

In general, there are variations, among individual infrared sensors, in the relationship between the energy of incident infrared rays and the voltage they produce as the sensor output, and therefore, in the manufacturing process of the air conditioner, the sensitivity of its infrared sensor is adjusted, and the correction data for that individual infrared sensor is stored in a non-volatile memory IC 103. When the floor surface temperature is measured, the value obtained by correcting the measured temperature on the basis of the correction data is used as the detected floor surface temperature.

For the adjustment of the sensitivity of the infrared sensor 80, it is possible to use a device that does not reflect infrared rays and that maintains a stable absolute temperature, i.e. a so-called surface black body.

Next, the formula used to calculate the floor surface temperature will be described. At the ambient temperature of the infrared sensor at the time of measurement of the floor surface temperature, let the output voltage of the amplifier circuit 100 when the infrared sensor input switch of the amplifier circuit 100 is off be $Vz$, and let the output voltage of the amplifier circuit 100 when the infrared sensor input switch of the amplifier circuit 100 is on be $Vs$. Moreover, let the ambient temperature of the infrared sensor be $Ta$, and let the temperature gradient of the output voltage of the amplifier circuit 100 be A. Then,

$$(\text{Floor Surface Temperature}) = Ta - (Vz - Vs) / A \ [°C]$$

Here, the correction data stored in the non-volatile memory 103 is used as *A*.

In the description above, the measurement of the floor surface temperature has been discussed. However, the wall surface temperature can be measured in the same manner.

The temperature detection device, employing a thermopile-type infrared sensor 80, is fitted to the indoor unit 40 of an air conditioner to detect the floor surface temperature of the room. This makes it possible to measure the absolute temperature of the floor surface accurately.

Moreover, the temperature detection device of the present invention does not require such high accuracy as is required by commercially available radiation thermometers, and thus can be realized relatively inexpensively by sharing circuits and functions conventionally provided in an air conditioner.

Moreover, by forming the heat-conductive member 90, which serves to narrow the viewing angle, as a casting of aluminum, it is possible to give it the desired shape and increase its heat capacity. This makes it possible to detect the floor surface temperature stably without the effect of a sudden change in the ambient temperature.

Hereinafter, a description will be given of an air conditioner that operates in a demonstration mode without being commanded to do so when exhibited at a distributor's shop or an exhibition.

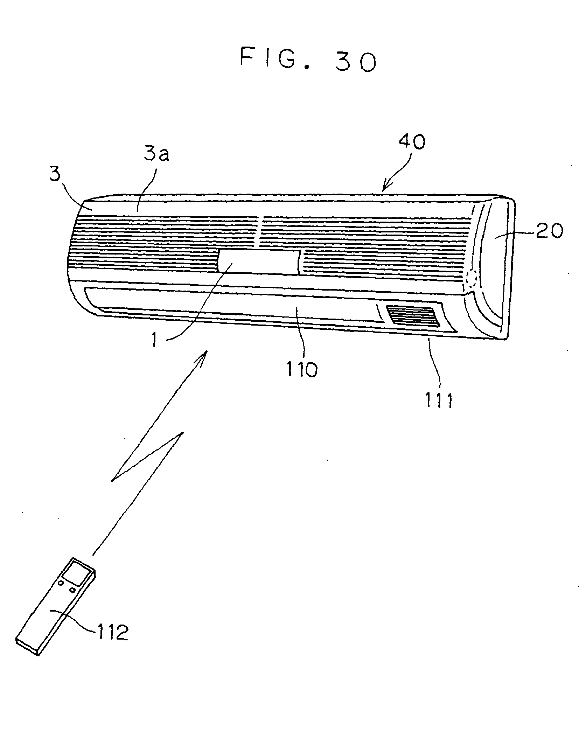

As Fig. 30 shows, an indoor unit 40 includes a body (casing) 20 having a heat exchanger and an indoor fan housed therein, an open panel (front panel) 3 that can be opened and closed to permit the user to visually check the inside of the body for dirt on filters, an air outlet 110 through which heated or cooled air is blown out, a front grille (air inlet) 3a through which the air in the room is sucked in, an indicator panel (body-side liquid crystal display device) 1 for indicating the operation status, and a dehumidifying/humidifying air outlet 111 through which dehumidified/humidified air from the dehumidifying/humidifying device (not shown) is blown out. Moreover, a remote control unit 112 is provided to permit the user to start and stop the operation of and switch the operation status of the air conditioner.

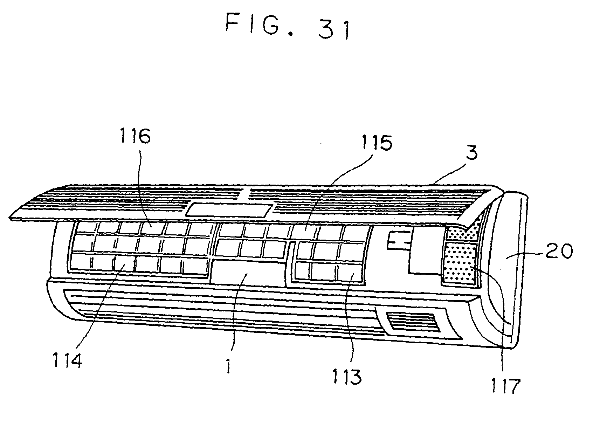

Moreover, as Fig. 31 shows, with the open panel 3 open, a right-hand filter 113 and a left-hand filter 114 are arranged so as to cover the air inlet of the body 20 and face the front grille 3a of the open panel 3. Substantially at the centers of these filters 113 and 114, air purification filters 115 and 116 are fitted respectively. In a right-hand portion of the body, a dehumidification/humidification filter 117 is arranged so as to cover the air inlet though which the dehumidifying/humidifying device sucks in the air in the room.

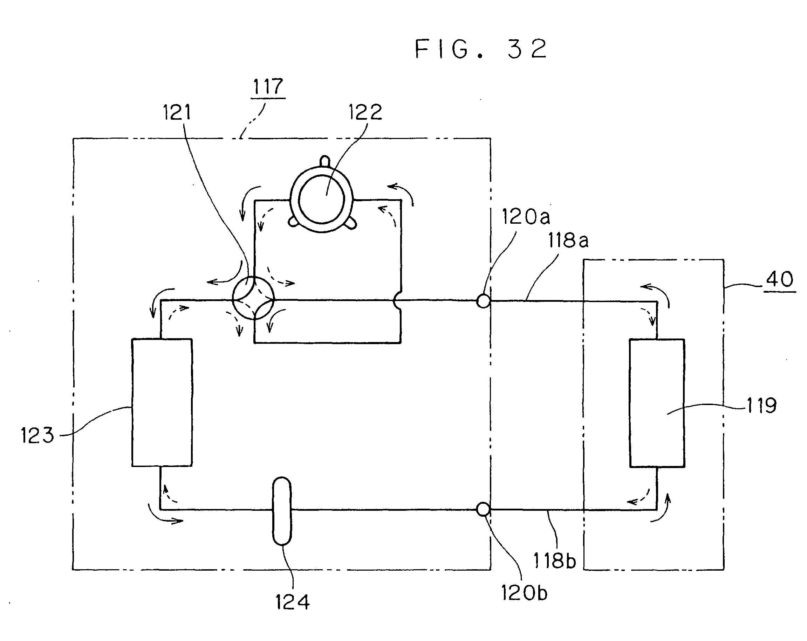

As Fig. 32 shows, this air conditioner is composed of the indoor unit 40, which is installed in a room to be air conditioned, and an outdoor unit 117, which is installed outside the room. The indoor unit 40 and the outdoor unit 117 are connected together by refrigerant pipes 118a and 118b.

Inside the indoor unit 40, an indoor heat exchanger 119 is provided, and one end of each of the refrigerant pipes 118a and 118b is connected to this indoor heat exchanger 119. The other end of the refrigerant pipe 118a is connected to a valve 120a of the outdoor unit 117. This valve 120a is connected through a four-way valve 121 to a compressor 122.

In the outdoor unit 117, an outdoor heat exchanger 123 is provided. This outdoor heat exchanger 123 is, at one end, connected to the four-way valve 121 and, at the other end, connected through an expansion valve 124 to a valve 120b. To this valve 120b, the other end of the refrigerant pipe 118b is connected. Thus, between the indoor unit 40 and the outdoor unit 117, a circulation path having a refrigerant hermetically sealed therein so as to form a refrigeration cycle is formed.

In the air conditioner, when a compressor motor (not shown) starts driving the compressor 122, the refrigerant starts circulating around the refrigeration cycle. In Fig. 32, arrows indicate the flow of the refrigerant in heating operation (heating mode, solid-line arrows) and in cooling operation (cooling or drying mode, broken-line arrows). As these arrows indicate, in the air conditioner, the switching of the operation mode between a cooling mode (including drying mode) and a heating mode is achieved by the switching of the four-way valve 121. The evaporating temperature of the refrigerant is adjusted by controlling the valve position of the expansion valve 124.

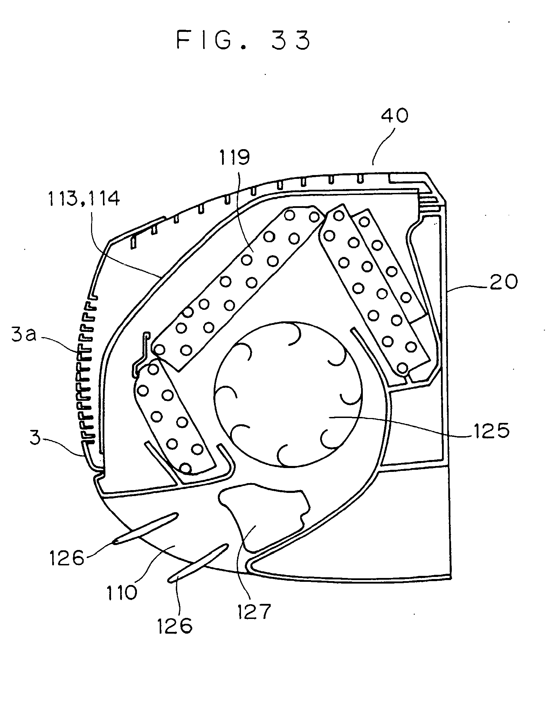

As Fig. 33 shows, in the indoor unit 40, the front grille 3a and the air outlet 110 are formed in the body 20, and, inside this body 20, the indoor heat exchanger 119 is arranged. The indoor unit 40 is fixed at a predetermined height on the surface of a wall or the like in the air-conditioned room by a base plate (not shown) provided on the back face of the body 20.

Inside the body 20, in addition to the indoor heat exchanger 119, a cross-flow fan 125 is arranged. As the cross-flow fan 125 is driven, the air in the room is sucked into the body 20 through the front grille 3 a and then through the filters 113 and 114. The air sucked into the body 20 passes through the indoor heat exchanger 119, and is then blown out through the air outlet 110 into the room. As the air passes through the indoor heat exchanger 119, it exchanges heat with the refrigerant circulating inside the indoor heat exchanger, and thereby turns into temperature-conditioned air, with which the room is air-conditioned.

In the air outlet 110 of the indoor unit 40, a horizontal louver 126 for changing the flow of air in the vertical direction is provided, and, behind the horizontal louver 126, a vertical louver 127 for changing the flow of air in the horizontal direction is provided. Thus, the direction of the conditioned air blown out through the air outlet 110 is changed by the horizontal louver 126 and the vertical louver 127. The direction of the vertical louver 127 can be changed manually, and therefore, mainly by controlling the direction of the horizontal louver 126, the direction of the conditioned air blown out through the air outlet 110 is controlled. The direction of the vertical louver 127 may be controlled in addition to that of the horizontal louver 126.

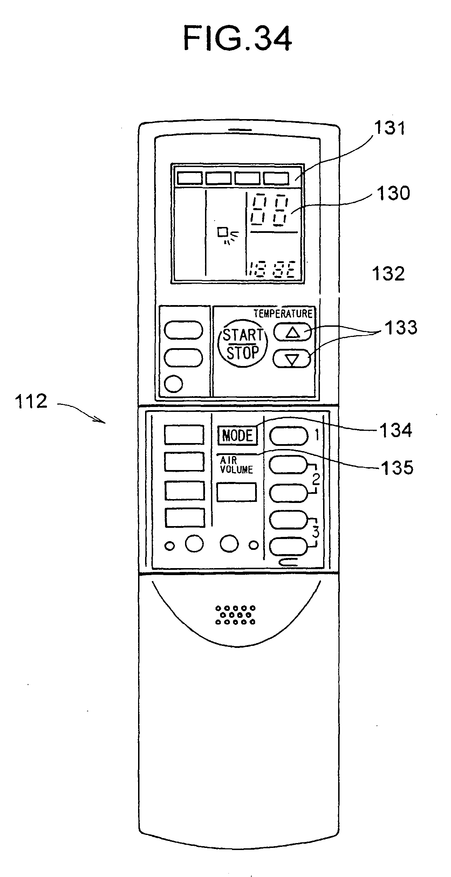

Fig. 34 shows a remote control unit 112, which includes a remote control unit display portion 130 for indicating the operation status, a transmission indicator 131 that is lit when a signal is transmitted to the indoor unit, a "start/stop" switch 132 that is used to operate the air conditioner, a temperature switch 133 that is used to set the room temperature, a "mode select" switch 134 that is used to switch the operation mode, and an "air volume" switch 135 that is used to control the volume of air.

The air conditioner is operated in the following manner. Every time the "mode select" switch 134 on the remote control unit 112 is pressed, the operation mode of the air conditioner is switched from "automatic" to "heating" to "cooling" to "drying" to "automatic", and the corresponding indication appears on the remote control unit display portion 130. In this way, the operation mode of the air conditioner is selected.

When the "start/stop" switch 132 on the remote control unit 112 is pressed, the operation mode, the specified temperature, and the room temperature are displayed one after another on the indicator panel 1 of the indoor unit 40, and the air conditioner starts operating. During operation, the room temperature is kept displayed.

To stop the operation, the "start/stop" switch 132 on the remote control unit 112 is pressed. This causes the display on the indicator panel 1 of the indoor unit 40 to go out, and causes the air conditioner to stop operating. To change the temperature, for example to increase the temperature by 1 °C, the "Δ" switch of the temperature switch 133 on the remote control unit 112 is pressed once. This makes the specified temperature 1 °C higher, and, in heating or cooling mode, the specified temperature is displayed on the remote control unit display portion 130 and the indicator panel 1 of the indoor unit 40; in automatic or drying operation, the entered temperature is displayed on the remote control unit display portion 130 and the specified temperature is displayed on the indicator panel 1 of the indoor unit 40. In this case, about four seconds thereafter, the display of the specified temperature on the indicator panel 1 of the indoor unit 40 turns back to the display of the room temperature. To change the volume of air, every time the "air volume" switch 135 on the remote control unit 112 is pressed, the volume of air is switched, with the indication on the remote control unit display portion 130 changing from "air volume auto" to "air volume Δ" to "air volume ΔΔ "to "air volume ΔΔΔ" to "air volume auto" and the indication on the indicator panel 1 of the indoor unit 40 changing from "air volume auto" to "gentle wind" to "moderate wind" to "strong wind" to "air volume auto."

When one of the switches on the remote control unit 112 is operated, an operation signal having a predetermined format corresponding to the state of that switch is transmitted as an infrared signal (a signal produced by turning an infrared ray emitting device on and off in a predetermined sequence).

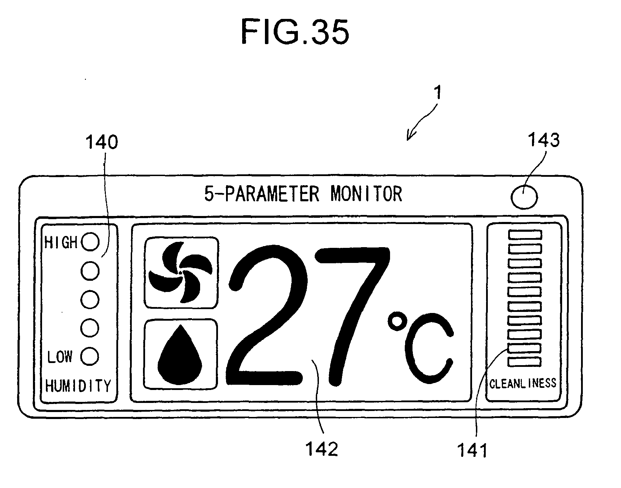

As Fig. 35 shows, in a central portion of the indoor unit 40, the indicator panel 1 is provided. The indicator panel 1 includes a humidity lamp 140 that is lit according to the humidity in the room, a cleanliness lamp 141 that changes its color according to the degree of contamination of the air in the room, a display portion 142 that displays the ambient conditions in the room and the operation status according to the signals from the operation buttons on the remote control unit, and a photoreceiver portion 143 that receives signals from the remote control unit.

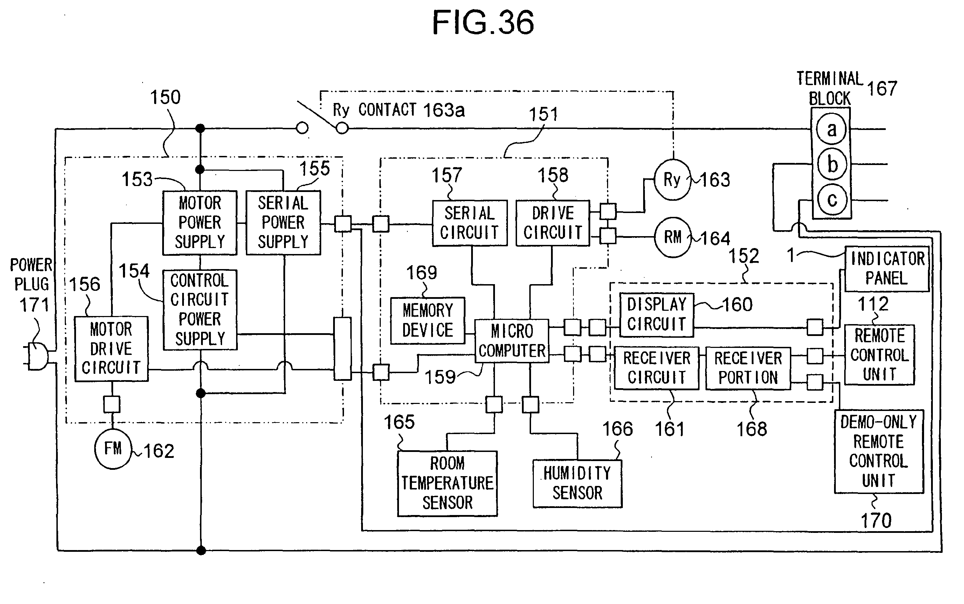

As Fig. 36 shows, the indoor unit 40 is provided with a power supply circuit board 150, a control circuit board 151, and a display circuit board 152. The power supply circuit board 150 is provided with a motor power supply 153, a control circuit power supply 154, a serial power supply 155, and a motor drive circuit 156, and receives electric power (for example, a single-phase alternating-current voltage of 100 V) for operating the air conditioner. The control circuit board 151 is provided with a serial circuit 157, a drive circuit 158, and a microcomputer 159. The display circuit board 152 is provided with a display circuit 160 and a receiver circuit 161.

To the motor drive circuit 156 of the power supply circuit board 150, a fan motor 162 for driving the aforementioned cross-flow fan 125 is connected so that drive electric power is fed thereto from the motor power supply 153 according to a control signal from the microcomputer 159. Here, the microcomputer 159 controls the motor drive circuit 156 in such a way as to vary its output voltage. This permits adjustment of the volume of air-conditioned air blown out through the air outlet 110 of the indoor unit 40.

To the drive circuit 158 of the control circuit board 151 are connected a power relay (Ry) 163 for supplying electric power to the outdoor unit 117 and a horizontal louver motor (RM) 164 for operating the horizontal louver 126. The power relay (Ry) 163 is operated according to a signal from the microcomputer 159 so that its contact 163a, by way of which electric power is supplied to the outdoor unit 117, is opened and closed. In the air conditioner, when the contact 163a is closed, electric power can be supplied to the outdoor unit 117.

The horizontal louver motor (RM) 164 is operated according to a control signal from the microcomputer 159 and thereby the direction of the horizontal louver 126 is changed so that air-conditioned air is blown out toward the desired region.

The serial circuit 157, which is connected to the microcomputer 159 and to the serial power supply 155 of the power supply circuit board 150, is connected to the outdoor unit 117. The microcomputer 159 conducts serial communication with the outdoor unit 117 through the serial circuit 157.

Moreover, to the microcomputer 159 are connected a room temperature sensor 165 for detecting the temperature in the room, a humidity sensor 166 for detecting the humidity in the room, and the receiver circuit 161 and the display circuit 160 provided on the display circuit board 152.

The indoor unit 40 is provided with a terminal block 167 to which the wiring leading to the outdoor unit 117 is connected. This terminal block 167 has terminals 167a, 167b, and 167c to which leads are connected by way of which electric power is supplied from the indoor unit 40 to the outdoor unit 117 and serial communication is conducted between the indoor unit 40 and the outdoor unit 117.

In the air conditioner, when a switch on the remote control unit described later is operated to start ordinary air-conditioning operation, the power relay (Ry) 163 is turned on to close its contact 163a so that electric power starts being supplied to the outdoor unit 117. Then, the microcomputer 159 provided in the indoor unit 40 starts conducting serial communication with the microcomputer (not shown) provided in the outdoor unit 117 to control the operation of the outdoor unit 117.

On the display circuit board 152 are provided the indicator panel 1 that displays the operation status and a receiver portion 168 that is provided with a photoreceiver device for receiving the operation signals transmitted from the switches on the remote control unit 112. The receiver portion 168, provided with the photoreceiver device, is connected to the receiver circuit 161, so that the operation signals received by the photoreceiver device are fed from the receiver circuit 161 to the microcomputer 159.

In the air conditioner, the switches on the remote control unit 112, the receiver portion 168 that receives the operation signals transmitted from those switches on the remote control unit 112, and the receiver circuit 161 together constitute a remote control operation device (see Fig. 36). Thus, the operation signals from the switches on the remote control unit 112 are fed through the receiver circuit 161 to the microcomputer 159. According to these operation signals, the microcomputer 159 controls the operation of the air conditioner.

When the microcomputer 159 receives an operation signal requesting the start of operation (i.e. the operation signal produced when the start/stop button is operated), it turns on the power relay (Ry) 163 to start supplying electric power to the outdoor unit 117, and starts performing air-conditioning operation by controlling the outdoor unit 117 through serial communication.

The air conditioner of this embodiment is equipped with a demonstration mode (abbreviated to "demo mode"), which is an operation mode that permits it to be operated for demonstration purposes at a distributor's shop, an exhibition, or the like.

The settings for the demonstration mode are stored in a memory device 169 provided on the control circuit board 151 in the indoor unit 40 and connected to the microcomputer 159, by first transmitting the signals representing the demonstration mode settings to the microcomputer 159 by another means (a demonstration-only remote control unit 170) and then transferring those settings from the microcomputer 159 to the memory device 169 for temporary storage. With the demonstration mode settings stored in the memory device 169, the outdoor unit 117 is shipped from the factory and is exhibited at a distributor's shop. In the demonstration mode of this embodiment, air-conditioning operation is not performed according to the temperature set with the switches on the remote control unit 112 as ordinarily performed, nor is the outdoor unit 117 controlled.

In the demonstration mode, the operation status, the temperature in the room, the humidity in the room, the advising function proposing the suitable operation mode, and the like are displayed one item after another on the indicator panel 1 of the indoor unit 40, and this is repeated.

The demonstration mode is canceled in the following manner. When the indoor unit 40 and the outdoor unit 117 are electrically connected together and serial communication between the indoor unit 40 and the outdoor unit 117 is established through operation of the remote control unit 112, the microcomputer 159 issues a signal that cancels the demonstration mode settings stored in the memory device 169. Once canceled, the demonstration mode settings are never stored in the memory device 169. Thus, once the air conditioner is installed and the indoor unit and the outdoor unit are connected together, there is completely no possibility of the demonstration mode being started again. On the other hand, the demonstration mode can be started easily at a distributor's shop without going through complicated operation as is required conventionally.

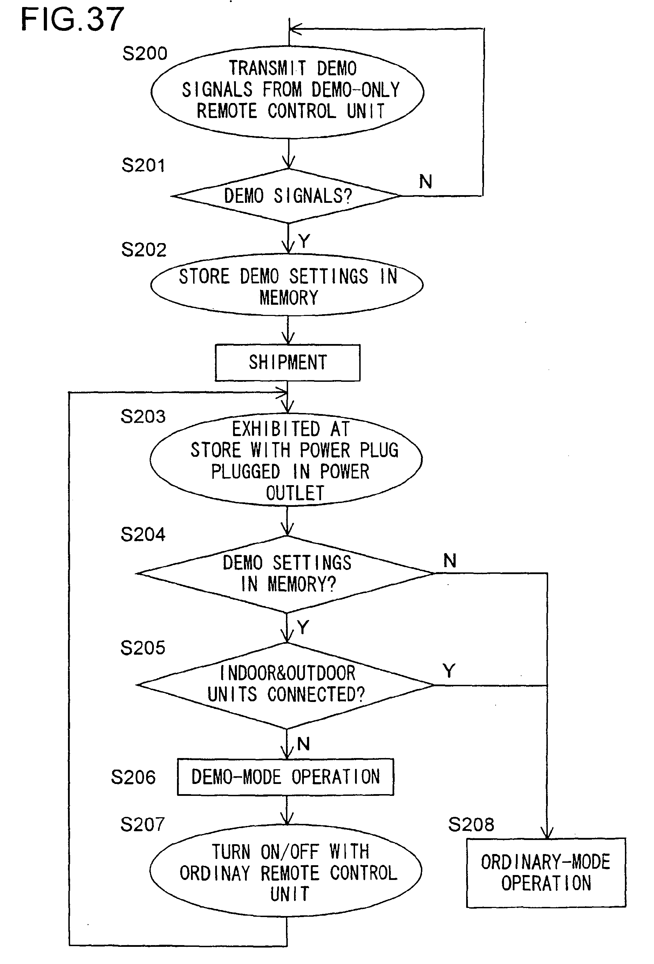

Now, with reference to Fig. 37, an outline of the effect of this embodiment will be described.

First, in step 200, using the special, demonstration-only remote control unit 170, the signals representing the settings for the demonstration mode are transmitted to the indoor unit 40 so as to be received by the receiver portion 168. Then, in step 201, the microcomputer 159 analyzes the received signals representing the demonstration mode settings, and, if it recognizes that those signals include an identification of the "demonstration mode settings," the flow proceeds to step 202.

In step 202, the microcomputer stores the demonstration mode settings in the memory device 169. With the demonstration mode settings stored in the memory device 169, the air conditioner is shipped from the factory.

With the demonstration mode settings stored in the memory device, the flow proceeds to step 203. In step 203, the power plug 171 of the indoor unit 40 is plugged into a power outlet, and the flow proceeds to step 204.

In step 204, when the power plug 171 of the indoor unit 40 is plugged into a power outlet, the microcomputer 159 checks whether the demonstration mode settings are stored in the memory device 169 or not. If the demonstration mode settings are found to be stored in the memory device 169, the flow proceeds to step 205.

In step 205, whether the outdoor unit 117 is connected to the indoor unit 40 or not is checked. If the outdoor unit is found to be not connected, the flow proceeds to step 206.

If, in step 204 above, the demonstration mode settings are found to be not stored or, in step 205 above, the outdoor unit is found to be connected, the flow proceeds to step 208 to make the air conditioner ready for ordinary operation using the remote control unit 112.

In step 206 above, the air conditioner is operated in the demonstration mode, in which the operation status, the temperature in the room, the humidity in the room, the advising function proposing the suitable operation mode, and the like are displayed one item after another on the indicator panel 1, and this is repeated.

In the operations performed in step 206, as described earlier, no communication is established with the outdoor unit 117. Thus, the air conditioner performs no operation related to the outdoor unit 117 but only operations related to the display on the indoor unit 40.

On the other hand, during operation in the demonstration mode in step 206, even if the ordinary remote control unit is operated, no command other than that requesting the operation to stop is accepted. When the operation is stopped in this way, the demonstration mode settings remain stored in the memory device 169.

To restart operation in the demonstration mode, either the power plug 171 of the indoor unit 40 is plugged into a power outlet back in step 203, or the demonstration-only remote control unit 170 is operated to request the restarting of operation. Then, the air conditioner starts operating in the demonstration mode again according to the settings stored in the memory device.

As described in detail above, in the air conditioner of this embodiment, the demonstration mode settings are stored in the memory device. In this way, it is possible to reduce the trouble required to start the demonstration mode as compared with cases where a plurality of switches on the remote control unit need to be pressed or the mode select switch needs to be operated. Moreover, it is possible to eliminate the need to add a function of starting the demonstration mode to the mode select switch provided on the indoor unit, and thereby reduce costs.

Moreover, once the indoor unit is connected to the outdoor unit, the demonstration mode settings are canceled, and once the demonstration mode settings are canceled, there is no way to recover them. This helps prevent unnecessary trouble because there is no possibility of the demonstration mode being started under ordinary use.

As described above, in an air conditioner equipped with, in addition to ordinary operation modes, a demonstration mode for demonstration purposes, a memory device for storing the settings for the demonstration mode is provided, and the air conditioner is shipped with the settings for the demonstration mode stored in the memory device. Thus, at a distributor's shop, the air conditioner can be operated in the demonstration mode simply by plugging the power plug of the indoor unit of the air conditioner into a power output. That is, the demonstration mode can be started easily without complicated operation.

Moreover, the settings for the demonstration mode stored in the memory device are canceled once the indoor unit and the outdoor unit of the air conditioner are electrically connected together. This helps prevent unnecessary trouble because there is no possibility of the demonstration mode being started erroneously under ordinary use.

**Industrial applicability**

The air conditioner of the present invention can be applied to coolers, heaters, cooler-heaters, air conditioners provided with an air purifying function, and the like, irrespective of whether their indoor and outdoor units are integrated together or provided as separate units. The temperature detection device of the present invention can be applied to such air conditioners and the like as mentioned above.

**Claims**

1. An air conditioner comprising a body (20) of an indoor unit, a light source (6) placed inside the body, and an indicator panel (1), fitted on a front face of the body, that, when the light source is lit, displays a pattern (12) so that the pattern is visually recognizable,
   wherein the pattern is so formed as to transmit light emitted from the light source by laying, on a half-mirror film (15) formed substantially all over a back surface of the indicator panel, an opaque film (16) except in a portion of the half-mirror film corresponding to the pattern, the pattern being formed between the half-mirror film and the light source, wherein a remote control signal receiver (21) for receiving a signal transmitted from a remote control unit is placed behind the indicator panel, and

wherein an insulating means (23, 24) is provided between the remote control signal receiver and the half-mirror film.

2. An air conditioner as claimed in claim 1,
wherein the surface of the indicator panel on which the half-mirror film is formed is flat.

3. An air conditioner as claimed in claim 1,
wherein the indicator panel has bracket portions (1a), at which the indicator panel is held, formed along two opposite sides thereof, the bracket portions being thinner than an indicator portion of the indicator panel on which the pattern is formed, the indicator and bracket portions being separated by straight border lines.

4. An air conditioner as claimed in claim 1,
wherein the indicator panel has bracket portions (1a), at which the indicator panel is held, formed along two opposite sides thereof, and the body has claws (2d) or grooves (2e) formed thereon or therein so as to engage with the bracket portions, the bracket portions being thinner than a indicator portion of the indicator panel on which the pattern is formed, the indicator and bracket portions being separated by straight border lines.

5. An air conditioner as claimed in claim 1,
wherein a diffuser (17) is provided between the indicator panel and the light source.

6. An air conditioner as claimed in claim 5,
wherein the diffuser is colored.

7. An air conditioner as claimed in claim 1,
wherein the insulating means (23) is provided on a surface of the remote control signal receiver.

8. An air conditioner as claimed in claim 7,
wherein the insulating means (23) is an insulating sheet.

9. An air conditioner as claimed in claim 7,
wherein the insulating means (23) is insulating paint.

10. An air conditioner as claimed in claim 1,
wherein the insulating means (24) is provided in a portion of the indicator panel facing the remote control signal receiver.

11. An air conditioner as claimed in claim 10,
wherein the insulating means (24) is an insulating sheet.

12. An air conditioner as claimed in claim 10,
wherein the insulating means (24) is insulating paint.

13. An air conditioner as claimed in claim 1,
wherein the half-mirror film has a higher transmittance in a portion (A) of the indicator panel facing the remote control signal receiver than in a remaining portion of the indicator panel.

14. An air condition as claimed in claim 13,
wherein the half-mirror film is removed in a portion (A) of the indicator panel facing the remote control signal receiver.

15. An air conditioner as claimed in claim 13 or claim 14,
wherein etching (31) is applied to a front surface or the back surface of the indicator panel in the portion (A) thereof facing the remote control signal receiver.

16. An air conditioner as claimed in claim 13 or claim 14,
wherein light-diffusive print (32) is applied to a front surface or the back surface of the indicator panel in the portion (A) thereof facing the remote control signal receiver.

17. An air conditioner as claimed in claim 13 or claim 14,
wherein a diffusive sheet (33) is affixed to the back surface of the indicator panel in the portion (A) thereof facing the remote control signal receiver.

18. A air conditioner as claimed in claim 13 or claim 14,
wherein a convex-lens-shaped portion (34) is formed on a front surface of the indicator panel in the portion (A) thereof facing the remote control signal receiver.

19. An air conditioner as claimed in claim 13 or claim 14,
wherein a convex-lens-shaped portion (34) is formed on a front surface of the indicator panel in the portion (A) thereof facing the remote control signal receiver, and etching (31) or light-diffusive print (32) is applied to a surface of the convex-lens-shaped portion.

**Patentansprüche**

1. Klimagerät mit einem Gehäuse (20) einer Innenraumeinheit, einer Lichtquelle (6), die im Inneren des Gehäuses angeordnet ist, und einer Anzeigetafel (1), die an einer Vorderseite des Gehäuses angebracht ist, die, wenn die Lichtquelle leuchtet, ein Muster (12) derart anzeigt, dass das Muster visuell erkennbar ist,
wobei das Muster so ausgebildet ist, um Licht, welches von der Lichtquelle ausgesandt wird, zu übertragen durch Auflegen einer opaken Schicht (16) auf eine halb verspiegelte Schicht (15), die im Wesentlichen über der gesamten Rückseite der Anzeigetafel ausgebildet ist, außer in einem Bereich der halb verspiegelten Schicht, der mit dem Muster korrespondiert, wobei das Muster zwischen der halb verspiegelten Schicht und der Lichtquelle ausgebildet ist,
wobei ein Fernsteuersignalsempfänger (21) zum Empfangen eines von einer Fernsleuereinheit ausgesandten Signals hinter der Anzeigetafel angeordnet ist und
wobei eine Isoliereinrichtung (23, 24) zwischen dem Fernsteuersignalempfänger und der halb verspiegelten Schicht vorgesehen ist.

2. Klimagerät nach Anspruch 1,
wobei die Oberfläche der Anzeigetafel, auf welcher die halb verspiegelte Schicht ausgebildet ist, flach ist.

3. Klimagerät nach Anspruch 1,
wobei die Anzeigetafel Befestigungsbereiche (1a) aufweist, an welchen die Anzeigetafel gehaltert ist, die entlang zweier gegenüberliegender Seiten davon ausgebildet sind, wobei die Befestigungsbereiche dünner ausgebildet sind als ein Anzeigebereich der Anzeigetafel, an oder auf welchem das Muster ausgebildet ist, wobei die Anzeigebereiche und die Bereiche von einander durch gerade Grenzlinien getrennt sind.

4. Klimagerät nach Anspruch 1,
wobei die Anzeigetafel Befestigungsbereiche (1a) aufweist, an welchen die Anzeigetafel gehaltert wird, die entlang zweier gegenüberliegenden Seiten davon ausgebildet sind, und wobei das Gehäuse Klauen (2d) und Ausnehmungen (2e) darauf oder darin ausgebildet aufweist, um mit den Befestigungsbereichen einzugreifen, wobei die Befestigungsbereiche dünner aus gebildet sind als ein Anzeigebereich der Anzeigetafel, auf welchem das Muster ausgebildet ist, wobei die Anzeigebereiche und die Befestigungsbereiche voneinander durch gerade Grenzlinien getrennt sind.

5. Klimagerät nach Anspruch 1,
wobei ein Diffusor (17) zwischen der Anzeigetafel und der Lichtquelle vorgesehen ist.

6. Klimagerät nach Anspruch 5,
wobei der Diffusor gefärbt ist.

7. Klimagerät nach Anspruch 1,
wobei die Isolationseinrichtung (23) auf einer Oberfläche des Fernsteuersignalempfängers vorgesehen ist.

8. Klimagerät nach Anspruch 7,
wobei die Isolationseinrichtung (23) eine Isolationsplatte bzw. - schicht ist.

**9.** Klimagerät nach Anspruch 7,
wobei die Isolationseinrichtung (23) ein Isolationslack ist.

**10.** Klimagerät nach Anspruch 1,
wobei die Isolationseinrichtung (24) in einem Bereich der Anzeigetafel vorgesehen ist, der dem Fernsteuersignalempfänger gegenüberliegt.

**11.** Klimagerät nach Anspruch 10,
wobei die Isolationseinrichtung (24) eine Isolationsplatte bzw. - schicht ist.

**12.** Klimagerät nach Anspruch 10,
wobei die Isolationseinrichtung (24) ein Isolationslack ist.

**13.** Klimagerät nach Anspruch 1,
wobei die halb verspiegelte Schicht ein höheres Transmissionsvermögen in einem Bereich (A) der Anzeigetafel aufweist, der dem Fernsteuersignalempfänger gegenüberliegt, als in einem verbleibenden Bereich der Anzeigetafel.

**14.** Klimagerät nach Anspruch 13,
wobei die halb verspiegelte Schicht in einem Bereich (A) der Anzeigetafel entfernt ist, der dem Fernsteuersignalempfäuger gegenüberliegt.

**15.** Klimagerät nach Anspruch 13 oder Anspruch 14,
wobei eine Ätzung (31) angewandt ist auf eine Vorderseite oder eine Rückseite der Anzeigetafel in dem Bereich (A) davon, der dem Fernsteuersignalempfänger gegenüberliegt.

**16.** Klimagerät nach Anspruch 13 oder Anspruch 14,
wobei ein Lichtverteilungsdruck (32) angebracht ist an einer Vorderseite oder einer Rückseite der Anzeigetafel im Bereich (A) davon, welcher dem Fernsteuersignalempfänger gegenüberliegt.

**17.** Klimagerät nach Anspruch 13 oder Anspruch 14,
wobei eine Diffusorplatte oder Diffusorschicht (33) an der Rückseite der Anzeigetafel in dem Bereich (A) davon angebracht ist, welcher dem Fernsteuersignalempfänger gegenüberliegt.

**18.** Klimagerät nach Anspruch 13 oder Anspruch 14,
wobei ein Bereich (34), geformt nach Art einer Konvexlinse, an einer Vorderseite der Anzeigetafel in dem Bereich (A) davon ausgebildet ist, der dem Fernsteuersignalempfänger gegenüberliegt.

**19.** Klimagerät nach Anspruch 13 oder Anspruch 14,
wobei ein Bereich (34), geformt nach Art einer Konvexlinse, an einer Vorderseite der Anzeigetafel in dem Bereich (A) davon ausgebildet ist, der dem Fernsteuersignalempfänger gegenüberliegt, und wobei eine Ätzung (31) oder ein Lichtdiffusionsdruck (32) an der Oberseite des konvexlinsenförmigen Bereichs angebracht ist.

**Revendications**

**1.** Appareil de climatisation comprenant un corps (20) d'une unité d'environnement intérieur, une source lumineuse (6) placée à l'intérieur du corps, et un panneau indicateur (1), installé sur une face avant du corps, qui, lorsque la source lumineuse est éclairée, affiche un motif (12) de sorte que le motif soit visuellement reconnaissable,
dans lequel le motif est formé afin de transmettre de la lumière émise de la source lumineuse en déposant, sur un film semi-miroir (15) formé sur une surface arrière sensiblement entière du panneau indicateur, un film opaque (16) sauf dans une partie du film semi-miroir correspondant au motif, le motif étant formé entre le film semi-miroir et la source lumineuse,
dans lequel un récepteur de signal de commande à distance (21) pour recevoir un signal transmis à partir d'une unité de commande à distance est placé derrière le panneau indicateur, et
dans lequel un moyen isolant (23, 24) est prévu entre le récepteur de signal de commande à distance et le film semi-miroir.

**2.** Appareil de climatisation selon la revendication 1,

dans lequel la surface du panneau indicateur sur laquelle le film semi-miroir est formé est plate.

3. Appareil de climatisation selon la revendication 1,
dans lequel le panneau indicateur comporte des parties de support (1a), auxquelles le panneau indicateur est accroché, formées le long de deux côtés opposés de celui-ci, les parties de support étant plus minces qu'une partie d'indicateur du panneau indicateur sur lequel le motif est formé, les parties d'indicateur et de support étant séparées par des lignes de bordure droites.

4. Appareil de climatisation selon la revendication 1,
dans lequel le panneau indicateur comporte des parties de support (1a), auxquelles le panneau indicateur est accroché, formées le long de deux côtés opposés de celui-ci, et le corps comporte des griffes (2d) ou des rainures (2e) formées sur ou dans celui-ci afin d'entrer en prise avec les parties de support, les parties de support étant plus minces qu'une partie d'indicateur du panneau indicateur sur lequel le motif est formé, les parties d'indicateur et de support étant séparées par des lignes de bordure droites.

5. Appareil de climatisation selon la revendication 1,
dans lequel un diffuseur (17) est prévu entre le panneau indicateur et la source lumineuse.

6. Appareil de climatisation selon la revendication 5,
dans lequel le diffuseur est coloré.

7. Appareil de climatisation selon la revendication 1,
dans lequel le moyen isolant (23) est prévu sur une surface du récepteur de signal de commande à distance.

8. Appareil de climatisation selon la revendication 7,
dans lequel le moyen isolant (23) est une feuille isolante.

9. Appareil de climatisation selon la revendication 7,
dans lequel le moyen isolant (23) est une peinture isolante.

10. Appareil de climatisation selon la revendication 1,
dans lequel le moyen isolant (24) est prévu dans une partie du panneau indicateur faisant face au récepteur de signal de commande à distance.

11. Appareil de climatisation selon la revendication 10,
dans lequel le moyen isolant (24) est une feuille isolante.

12. Appareil de climatisation selon la revendication 10,
dans lequel le moyen isolant (24) est une peinture isolante.

13. Appareil de climatisation selon la revendication 1,
dans lequel le film semi-miroir comporte un facteur de transmission plus élevé dans une partie (A) du panneau indicateur faisant face au récepteur de signal de commande à distance que dans une partie restante du panneau indicateur.

14. Appareil de climatisation selon la revendication 13,
dans lequel le film semi-miroir est éliminé dans une partie (A) du panneau indicateur faisant face au récepteur de signal de commande à distance.

15. Appareil de climatisation selon la revendication 13 ou la revendication 14,
dans lequel une gravure (31) est appliquée sur une surface avant ou la surface arrière du panneau indicateur dans la partie (A) de celui-ci faisant face au récepteur de signal de commande à distance.

16. Appareil de climatisation selon la revendication 13 ou la revendication 14,
dans lequel une impression de diffusion de lumière (32) est appliquée sur une surface avant ou la surface arrière du panneau indicateur dans la partie (A) de celui-ci faisant face au récepteur de signal de commande à distance.

17. Appareil de climatisation selon la revendication 13 ou la revendication 14,

FIG. 1

EP 1 326 055 B1

FIG. 2

FIG. 3

2

2a

2b

2c

2d

FIG. 4

FIG. 5

FIG. 6

# FIG. 7

# FIG. 8

F I G . 9

F I G . 10

FIG. 11

FIG. 12

FIG. 13A

FIG. 13B

FIG. 13C

FIG. 14 A

FIG. 14 B

A

31

5

1

EP 1 326 055 B1

31

1

1

31

FIG. 14 C

FIG. 15 A

FIG.15 B

FIG.15 C

EP 1 326 055 B1

EP 1 326 055 B1

FIG. 16 A        FIG. 16 B

FIG. 17A

FIG. 17B

EP 1 326 055 B1

FIG. 18A

FIG. 18B

FIG. 19

# FIG.20

```
44
┌─────────────────────┐                    ┌─────────────────────┐
│ RADIATION           │                    │ SPECIFIED           │
│ TEMPERATURE         │                    │ TEMPERATURE Ts      │
│ DETECTING MEANS     │                    │                     │
└─────────────────────┘                    └─────────────────────┘
         │                                            │
         │              51                            │          52
         ▼                                            ▼
┌─────────────────────┐                    ┌─────────────────────┐
│ FLOOR SURFACE       │                    │ TEMPEATURE          │
│ TEMPERATURE Tf      │────────────────────▶│ DIFFERENCE          │
│ CALCULATING MEANS   │                    │ EVALUATING MEANS    │
└─────────────────────┘                    └─────────────────────┘
         │                                            │
         │                                            │        54
         ▼                                            ▼
┌─────────────────────┐ ~53                ┌─────────────────────┐
│ SPECIFIED ROOM      │                    │ SPECIFIED INDOOR    │
│ TEMPERATURE         │                    │ FAN ROTATION RATE   │
│ CORRECTING MEANS    │                    │ CORRECTING MEANS    │
└─────────────────────┘                    └─────────────────────┘
     ▲                                                ▲
     │        55                                      │
┌─────────────────────┐     ┌──────────────────────────┐
│ SPECIFIED LOUVER    │     │ CHECK OPERATION MODE     │
│ ANGLE CORRECTING    │◀────│ (COOLING, DEHUMIDIFYIN   │
│ MEANS               │     │ G HEATING)               │
└─────────────────────┘     └──────────────────────────┘
     ▲                                                ▲
     │        56                                      │
┌─────────────────────┐                               │
│ FOOT-PRIORITY       │                               │
│ OPERATION           │───────────────────────────────┘
│ REQUESTING MEANS    │
└─────────────────────┘
```

# FIG.21

SPECIFIED ROOM TEMPERATURE CORRECTION TABLE
(BASED ON DIFFERENCE Tf-Ts BETWEEN FLOOR SURFACE
TEMPERATURE Tf AND SPECIFIED TEMPERATURE Ts)

| TEMPERATURE DIFFERENCE RANGE | $Tf-Ts \leqq -2$ | $-2 < Tf-Ts \leqq +2$ | $+2 < Tf-Ts$ |
|---|---|---|---|
| CORRECTION VALUE IN HEATING | +1.3°C | +0.7°C | 0°C |
| CORRECTION VALUE IN COOLING OR DEHUMIDIFYING | +1.3°C | +0.7°C | 0°C |

# FIG.22

SPECIFIED INDOOR FAN ROTATION RATE CORRECTION TABLE
(BASED ON DIFFERENCE Tf-Ts BETWEEN FLOOR SURFACE
TEMPERATURE Tf AND SPECIFIED TEMPERATURE Ts)

| TEMPERATURE DIFFERENCE RANGE | $Tf-Ts \leqq -2$ | $-2 < Tf-Ts \leqq +2$ | $+2 < Tf-Ts$ |
|---|---|---|---|
| CORRECTION VALUE IN HEATING | +120rpm | +60rpm | 0rpm |
| CORRECTION VALUE IN COOLING OR DEHUMIDIFYING | +120rpm | +60rpm | 0rpm |

ROTATION RATE NEVER EXCEEDS THAT OF "STRONG WIND"
(CORRECTION UPPER LIMIT)

# FIG.23

# FIG.24

# FIG.25A

# FIG.25B

# FIG.25C

EP 1 326 055 B1

# FIG. 26A

# FIG. 26B

# FIG. 26C

# FIG. 27

FIG. 28A

FIG. 28B

# FIG.29

# FIG. 30

FIG. 31

EP 1 326 055 B1

# FIG. 32

# FIG. 33

# FIG.34

# FIG.35

# FIG.36

# FIG.37

S200 ( TRANSMIT DEMO SIGNALS FROM DEMO-ONLY REMOTE CONTROL UNIT )

S201 ◇ DEMO SIGNALS? ◇ ——N——→

↓Y

S202 ( STORE DEMO SETTINGS IN MEMORY )

[ SHIPMENT ]

S203 ( EXHIBITED AT STORE WITH POWER PLUG PLUGGED IN POWER OUTLET )

S204 ◇ DEMO SETTINGS IN MEMORY? ◇ ——N——→

↓Y

S205 ◇ INDOOR&OUTDOOR UNITS CONNECTED? ◇ ——Y——→

↓N

S206 [ DEMO-MODE OPERATION ]

S207 ( TURN ON/OFF WITH ORDINAY REMOTE CONTROL UNIT )

S208 [ ORDINARY-MODE OPERATION ]

# FIG. 38

# FIG. 39

# FIG. 40

**EP 1 326 055 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S58108333 B
- JP H526508 B
- JP H10311591 B
- JP H9152180 B